# EUROPÄISCHE PATENTSCHRIFT

(11) **EP 3 043 228 B1**
(45) Veröffentlichungstag und Bekanntmachung des Hinweises auf die Patenterteilung: **19.09.2018**
(21) Anmeldenummer: 15156586.8
(22) Anmeldetag: 25.02.2015
(51) Int. Cl.: G05D 7/06

(54) **STRÖMUNGSREGLER SOWIE VERFAHREN ZUM EINSTELLEN VORGEBBAREN VOLUMENSTROMS**
FLUID FLOW CONTROL DEVICE AND METHOD FOR ADJUSTING A PREDETERMINED VOLUME FLOW
RÉGULATEUR D'ÉCOULEMENT ET PROCÉDÉ DE RÉGLAGE D'UN DÉBIT VOLUMIQUE PRÉDÉFINI

(30) Priorität: 09.01.2015 US 201562101785 P
(43) Veröffentlichungstag der Anmeldung: 13.07.2016
(73) Patentinhaber: Levitronix GmbH, 8005 Zürich (CH)
(72) Erfinder: Stöckli, Simon, 8050 Zürich (CH); Kalapos, Andreas, 8049 Zürich (CH); Zentner, Patrick, 8051 Zürich (CH); Burkart, Jürg, 8964 Rudolfstetten (CH)
(74) Vertreter: Intellectual Property Services GmbH

(56) Entgegenhaltungen:
- EP-A2- 0 888 827
- EP-A2- 0 953 749
- US-A1- 2007 215 639
- Paresh Girdhar ET AL: "Practical Centrifugal Pumps", , 1. Januar 2004 (2004-01-01), Seiten 106-107, XP055283963, ISBN: 978-0-7506-6273-4 Gefunden im Internet: URL:https://books.google.de/books?id=3Rjnm vQSFvcC&pg=PR3&hl=de&source=gbs_selected_p ages&cad=2#v=onepage&q&f=false [gefunden am 2016-06-27]

## Beschreibung

Die Erfindung betrifft einen Strömungsregler sowie ein Verfahren zum Einstellen eines vorgebbaren Volumenstroms in einem Strömungssystem gemäss dem Oberbegriff des unabhängigen Anspruchs der jeweiligen Kategorie.

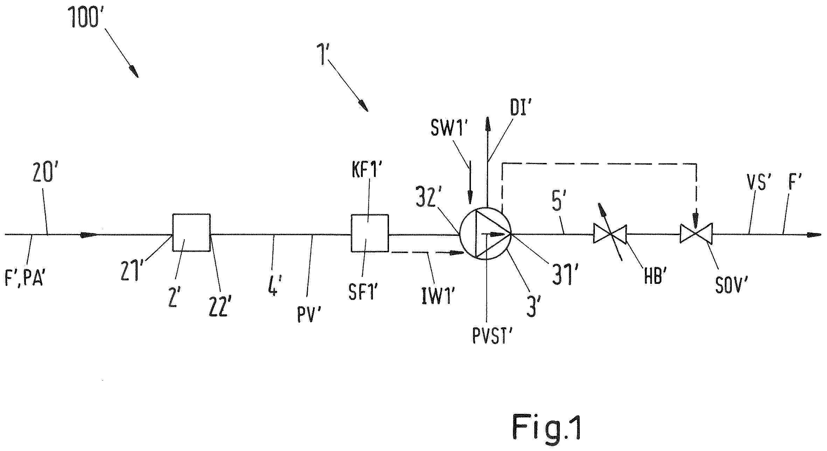

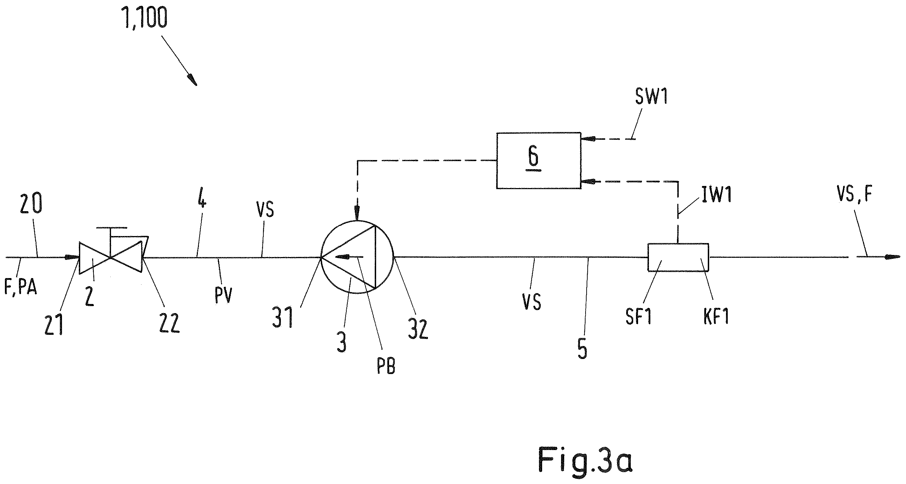

Strömungsregler zum Einstellen eines vorgebbaren Volumenstroms in einem Strömungssystem sind in vielen Ausführungsvarianten im Stand der Technik wohlbekannt. Entsprechende Vorrichtungen findet man unter anderem in der US 2007/215639 A1 oder der EP 0 953 749 A2. Eine häufig im Stand der Technik verwendete Konfiguration ist zum besseren Verständnis der Erfindung anhand der Fig. 1 schematisch dargestellt. Zur Unterscheidung der vorliegenden Erfindung von den aus dem Stand der Technik bekannten Lösungen sind die Bezugszeichen zu den bekannten Lösungen gemäss Fig. 1- 2 jeweils mit einem Hochkomma versehen, während die Bezugszeichen, die sich auf Merkmale erfindungsgemässer Ausführungsbeispiele gemäss Fig. 3a - 8c beziehen kein Hochkomma tragen.

Die bekannte Anordnung eines Strömungsreglers 1' zum Einstellen eines vorgebbaren Volumenstroms VS' eines Fluids F' in einem Strömungssystem 100' umfasst einen Sensor SF1' in Form eines Durchflusssensors SF1' zur Bestimmung eines Istwerts IW1' eines Fluidflusses KF1' des Fluids F'. Der Strömungsregler 1' umfasst weiter einen Vordruckregler 2' zum Einstellen eines vorgebbaren Vordrucks PV' an einem Vordruckausgang 22' des Vordruckreglers 2' sowie eine Regelpumpe 3', wobei das Fluid F' im Betriebszustand über eine Zuströmleitung 20' und einen Vordruckeingang 21' dem Vordruckregler 2' zuführbar und unter dem Vordruck PV' über eine zwischen dem Vordruckausgang 22' und der Regelpumpe 3' vorgesehene Strömungsverbindung 4' zu der Regelpumpe 3' weiterleitbar ist. Der Vordruckausgang 22' ist über die Strömungsverbindung 4' mit einem Niederdruckanschluss 32' der Regelpumpe 3' strömungsverbunden ist, so dass das Fluid F' vom Vordruckregler 2' der Regelpumpe 3' zuführbar und über einen Hochdruckanschluss 31' aus der Regelpumpe 3' in eine Abströmleitung 5' wieder abführbar ist. In Abhängigkeit vom ersten Istwert IW1' des Fluidflusses KF1' wird eine Drehzahl der Regelpumpe 3' mittels einer nicht explizit dargestellten Regelansteuerung unter Verwendung eines Sollwerts SW1' und /oder unter Verwendung eines Drehzahl-Istwerts DI' der Regelpumpe 3' derart einstellbar ist, dass durch die Regelpumpe 3' ein mit dem Vordruck PV' gleichwirkender Verstärkungssdruck PVST' erzeugbar ist, so dass der vorgebbare Volumenstrom VS' des Fluids F' in der Abströmleitung 5' einstellbar ist.

Das Fluid F' wird dabei im Betriebszustand der Zuströmleitung 20' unter dem Anlagendruck PA' zugeführt, wobei der Anlagendruck PA' in der Praxis häufig mehr oder weniger deutlichen Druck- und / oder Durchflussschwankungen unterliegt, die durch den Strömungsregler 1' möglichst gut über einen weiten Bereich ausgeregelt bzw. der Volumenstrom VS' eingestellt werden soll, so dass in der Abströmleitung 5' der gewünschte vorgegebene Volumenstrom VS' anliegt.

Dabei sind in der Praxis eine ganze Reihe weiterer Ausführungsformen von Strömungsreglern 1' bekannt, beispielsweise bei welchen der Sensor SF1' ein Drucksensor SF1' ist und / oder mehrere Sensoren eventuell auch an anderen Stellen der Srömungsstrecke vorgesehen sind. Der Vordruckregler 2' ist dabei eine Druck reduzierende Einheit, und kann insbesondere ein manueller Druckregler, ein pneumatischer Druckregler, ein elektrischer Druckregler, ein Proportionalventil oder eine andere geeignete Druck reduzierende Einheit sein.

Optional ist dabei häufig gemäss Fig. 1 beispielweise noch ein Absperrventil SOV' oder ein hydraulisches Begrenzungselement HB' vorgesehen, deren Funktionen dem Fachmann hinlänglich bekannt sind und für das Verständnis der vorliegenden Erfindung auch kaum eine Rolle spielen.

Ein wesentliches Problem der bekannten Strömungsregler 1', wie schematisch anhand Fig. 1 exemplarisch für den Stand der Technik dargestellt, besteht darin, dass die Vordruckregler 2' häufig passive Vordruckregler 2' sind und somit im wesentlichen für sich allein genommen einen P-Regler realisieren.

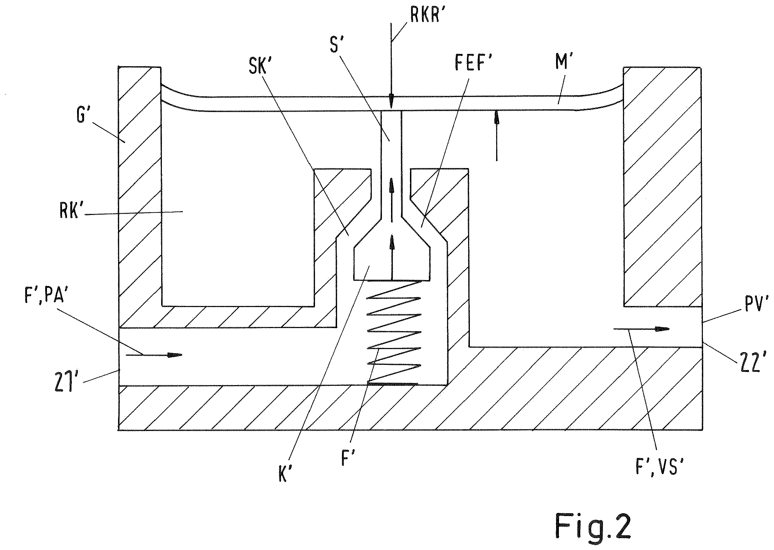

Ein solcher an sich bekannter passiver Vordruckregler 2' ist schematisch anhand der Fig. 2 dargestellt.

Dabei sei ausdrücklich darauf hingewiesen, dass der Vordruckregler 2' gemäss Fig. 2 auch besonders bevorzugt bei einem erfindungsgemässen Strömungsregler 1 gemäss Fig. 3a - Fig. 8c vorgesehen sein kann, da der erfindungsgemässe Strömungsregler 1 eben gerade unter anderem die durch den bekannten Vordruckregler 2' bedingten Nachteile erstmals zuverlässig behebt, wie weiter unten im Rahmen der detaillierten Beschreibung der Erfindung noch ausführlich dargelegt werden wird.

Der an sich bekannte Vordruckregler 2' gemäss Fig. 2, dessen Darstellung lediglich schematisch und exemplarisch für alle bekannten Vordruckregler dieser oder ähnlicher Art, insbesondere exemplarisch für alle P-Regler zu verstehen ist und der im vorliegenden Beispiel als mechanischer P-Regler ausgelegt ist, umfasst ein Gehäuse G' mit einer Steuerkammer SK' und einer Regelkammer RK'. Über den Vordruckeingang 21' wird das Fluid F' unter dem Anlagendruck PA' der Steuerkammer SK' zugeführt, in welcher Steuerkammer SK' ein durch eine Druckfeder F' belasteter Regelkolben K' vorgesehen ist. Wie der Fig. 2 deutlich zu entnehmen ist, ist der Regelkolben K' derart über eine Regelstange RS' mit einer elastischen Membran M' wirkverbunden, dass der Regelkolben K' durch eine auf die Membran M' wirkendende vorgebbare Regelkraft RKR' so gegen die Federkraft der Druckfeder F' positionierbar ist, dass eine effektive Durchflussfläche FEF' der Steuerkammer SK' derart einstellbar ist, dass der Vordruck PV' bzw. der Durchfluss des Fluids F' am Vordruckausgang 22' auf den vorgebbaren Volumenstrom VS' einstellbar ist. Die Steuerkammer SK' bildet somit im Wesentlichen eine steuer- bzw. regelbare Drossel. Wird die Regelkraft RKR' erhöht, so wird der Vordruck PV' grösser, wird die Regelkraft RKR' reduziert, so reduziert sich dementsprechend auch die effektive Durchflussfläche FEF' und der Vordruck PV' reduziert sich ebenfalls.

Der Volumenstrom VS' ist im Übrigen jeweils im gesamten Strömungssystem im wesentlichen gleich und zwar vor und nach dem Vordruckregler 2', sofern das Fluid F' eine im wesentlichen inkompressible Flüssigkeit wie z.B. Wasser, Öl, ein Slurry, Blut oder eine andere im Wesentlichen inkompressible Flüssigkeit ist.

Ein solcher Proportionalregler (P-Regler) hat, wie dem Fachmann seit langem wohlbekannt ist, eine Reihe von Nachteilen. Als reiner P-Regler hat der Regler, abgesehen von einer eventuell vorhandenen Hysterese der Membran M' kein Gedächtnis. D.h., als reiner P-Regler reagiert der Regler immer auf die momentane Eingangsgrösse (Regelkraft RKR') ohne die Vorgeschichte der Regelstrecke oder die Geschwindigkeit der Regelschwankungen mit zu berücksichtigen. D.h., er hat als reiner P-Regler keinen Integral- und keinen Differentialanteil.

Ausserdem hat die Membran M' bezüglich ihres Biegeverhalten meist eine mehr oder weniger stark ausgeprägte Hysterese im Kraftverlauf, so dass bei exakt gleicher Regelkraft RKR' nicht gewährleistet ist, dass auf den Regelkolben K' bzw. auf die Druckfeder F' immer die exakt gleiche Kraft wirkt. Da das Biegeverhalten der Membran M' einer Hysterese unterlieget, kann es z.B. sein, dass die Membran M' abhängig von der Vorgeschichte unter einer gewissen Eigenspannung steht, die z.B. einen Teil der Regelkraft RKR' kompensiert oder zu dieser hinzuzuaddieren ist, je nach dem in welcher Richtung die verbleibende Eigenspannung der Membran M' wirkt. Das wirkt sich selbstverständlich vor allem beim Regeln sehr kleiner Volumenströme VS' bzw. sehr kleiner Vordrücke PV' sehr negativ aus, da insbesondere hier kleine Abweichungen in der auf den Regelkolben K' wirkenden Kraft verhältnismässig grosse Schwankungen der Volumenströme VS' zur Folge haben können.

Ein dem Fachmann wohlbekannter, mit der soeben erläuterten Problematik zusammenhängender weiterer gravierender Nachteil ist, dass der Vordruckregler 2' der Fig. 2 bei kleinen Volumenströmen VS' bzw. bei kleinen eingespeisten Anlagedrücken PA' eine immer schlechter werdende Auflösung hat, je kleiner der eingestellte Volumenstrom VS' bzw. je kleiner der am Vordruckeingang 21' anliegende Anlagedruck PA' ist. Davon abgesehen haben solche passiven Regler immer gewisse Regelabweichungen im gesamten Regelbereich, wie der Fachmann weiss.

Diese und weitere dem Fachmann an sich bekannte Nachteile wirkenden sich natürlich negativ auf das Regelverhalten des bekannten Strömungsreglers 1' aus Vordruckregler 2' und Regelpumpe 3' insgesamt aus. Dabei ist nicht nur der Vordruckregler 2' allein verantwortlich für die Nachteile des bekannten Strömungsreglers 1'. Auch der Aufbau gemäss Fig. 1 an sich birgt gewisse Nachteile, die prinzipiell bei einer solchen Anordnung nicht zu vermeiden sind.

So lässt sich z.B. der Volumenstrom VS' bei entsprechend kleinen Volumenströmen VS' bzw. bei entsprechend kleinen Anlagedrücken PA' wie bereits erwähnt nur noch mit grossen Ungenauigkeiten und bei sehr kleinen Volumenströmen VS' oder bei sehr kleinen Anlagendrücken PA' und im schlimmsten Fall überhaupt nicht mehr regeln. Auch kann der Vordruck PV' bzw. der Volumenstrom VS' nicht exakt auf Null geregelt werde. Insbesondere kann die Flussrichtung des Volumenstroms VS' selbstverständlich auch nicht umgekehrt werden.

Die Gründe dafür liegen eigentlich auf der Hand. Die Regelpumpe 3' kann den Volumenstrom VS' grundsätzlich nur erhöhen und nicht erniedrigen, da sie zusätzlichen immer nur gleichwirkend mit dem Vordruck PV' zusätzlich Druck aufbauen kann. D.h., je höher die Drehzahl der Regelpumpe 3' ist, umso stärker kann der Volumenstrom VS' bis zu einer bestimmten maximal möglichen Grösse erhöht werden. Wird die Drehzahl der Regelpumpe 3' dagegen immer weiter reduziert, wird der Volumenstrom VS' immer weniger verstärkt, bis er beim Stillstand der Pumpe nicht mehr weiter verstärkt wird und dann nur noch vom Anlagendruck PA' bzw. von der Einstellung und dem Einfluss des Vordruckreglers abhängt.

Wenn entsprechend kleine Volumenströme VS' eingestellt werden sollen, wird das Regelverhalten des bekannten Strömungsreglers 1' gemäss Fig. 1 somit zunehmend vom Vordruckregler 2' alleine dominiert und damit auch von den oben beschriebenen Nachteilen.

Aber auch bei Volumenströmen VS', die nicht allzu klein und nicht allzu gross sind, also irgendwo in einem mittleren Regelbereich liegen, hat der bekannte Strömungsregler 1' nachteilige Eigenschaften. So kann er insbesondere auf schnelle Schwankungen, insbesondere auch Schwankungen hin zu grösseren Volumenströmen VS' nur sehr ungenügend reagieren, da die Regelpumpe 3' auf plötzlich ansteigende Volumenströme VS' bzw. auf einen plötzlich ansteigenden Vordruck PV' nur dadurch reagieren kann, dass die Drehzahl der Regelpumpe 3' reduziert wird, also die Verstärkung des Volumenstroms VS' durch die Regelpumpe 3' abgeschwächt wird. Aber die Regelpumpe 3' kann den Volumenstrom VS' bzw. den Vordruck PV' nicht aktiv reduzieren. Das führt zu einem mehr oder weniger nicht linearen und oft zu zumindest leicht instabilem Regelverhalten des bekannten Strömungsreglers 1' insbesondere im Bereich mittelgrosser Volumenströme VS', also bei Volumenströmen VS', die weder sehr nahe bei null sind noch sehr Nahe an der Obergrenze maximaler Volumenströme VS' angesiedelt sind.

Zusammengefasst hat der bekannte Strömungsregler 1' gemäss Fig. 1 insbesondere in den für die Praxis besonders relevanten Regelbereichen, nämlich im Bereich kleiner Volumenströme VS' bzw. kleiner Anlagendrücke PA' sowie im mittleren Regelbereich, indem die zu regelnden Strömungssysteme in der Praxis am häufigsten betrieben werden massive Nachteile, die prinzipieller Natur sind und sich damit z.B. durch einfache Anpassungs- bzw. Justierungsmassnahmen nicht beheben lassen.

Die Aufgabe der Erfindung ist es daher einen Strömungsregler bereitzustellen, bei welchem die Nachteile der aus dem Stand der Technik bekannten Strömungsregler behoben sind. Der in einem Strömungssystem insbesondere auch bei kleinen Volumenströmen oder bei einem kleinen Vordruck ein ausreichend zuverlässiges Regelverhalten des Volumenstroms garantiert, und mit welchem insbesondere der Volumenstrom auch genügend exakt auf null geregelt werden kann. Darüber hinaus soll es zusätzlich möglich sein, die Flussrichtung des Volumenstroms im Strömungssystem umzukehren und auch bei Volumenströmen mittlerer Grösse ein zuverlässiges bzw. annähernd lineares Regelverhalten zu garantieren. Zudem soll die Möglichkeit eröffnet werden, bereits bestehende Strömungssysteme durch den Austausch weniger Komponenten auf ein erfindungsgemässes Strömungssystem umzurüsten, so dass bestehende Anlagen nicht zwangsläufig ganz oder teilweise erneuert werden müssen um die Vorteile des neuen erfindungsgemässen Strömungsreglers nutzen zu können. Dabei soll der Strömungsregler im Speziellen Fällen so ausgestaltet werden können, dass auch der Volumenstrom von chemisch oder physikalisch hochaggressiven Flüssigkeiten oder z.B. von biologisch oder medizinisch hochsensiblen oder auch der Volumenstrom von hochreine Flüssigkeiten problemlos regelbar ist, ohne dass der Strömungsregler solche Flüssigkeiten negativ beeinträchtigt.

Die diese Aufgaben in verfahrenstechnischer und apparativer Hinsicht lösenden Gegenstände der Erfindung sind durch die Merkmale des unabhängigen Anspruchs der jeweiligen Kategorie gekennzeichnet.

Die jeweiligen abhängigen Ansprüche beziehen sich auf besonders vorteilhafte Ausführungsformen der Erfindung.

Erfindungsgemäss wird somit ein Strömungsregler zum Einstellen eines vorgebbaren Volumenstroms eines Fluids, umfassend einen ersten Sensor zur Bestimmung eines ersten Istwerts einer ersten Strömungskenngrösse des Fluids, einen Vordruckregler zum Einstellen eines vorgebbaren Vordrucks an einem Vordruckausgang des Vordruckreglers sowie eine Regelpumpe in Form einer Kreiselpumpe. Das Fluid ist dabei im Betriebszustand unter einem Anlagendruck über eine Zuströmleitung und einen Vordruckeingang dem Vordruckregler zuführbar und unter dem Vordruck über eine zwischen dem Vordruckausgang und der Regelpumpe vorgesehene Strömungsverbindung zu der Regelpumpe weiterleitbar. Erfindungsgemäss ist der Vordruckausgang über die Strömungsverbindung mit einem Hochdruckanschluss der Regelpumpe strömungsverbunden, so dass das Fluid vom Vordruckregler der Regelpumpe zuführbar und über einen Niederdruckanschluss aus der Regelpumpe in eine Abströmleitung wieder abführbar ist, wobei in Abhängigkeit vom ersten Istwert der ersten Strömungskenngrösse eine Drehzahl der Regelpumpe mittels einer Regelansteuerung unter Verwendung eines ersten Sollwerts derart einstellbar ist, dass durch die Regelpumpe ein dem Vordruck entgegen wirkender Begrenzungsdruck erzeugbar ist, so dass der vorgebbare Volumenstrom des Fluids in der Abströmleitung einstellbar ist.

Wesentlich für die Erfindung ist, dass der Vordruckausgang des Vordruckreglers über die Strömungsverbindung mit dem Hochdruckanschluss der Regelpumpe strömungsverbunden ist, so dass das Fluid vom Vordruckregler dem Hochdruckanschluss und nicht dem Niederdruckanschluss der Regelpumpe zuführbar ist. D.h., die Regelpumpe arbeitet nicht wie im Stand der Technik als Verstärkungsmittel zur Erhöhung des Volumenstroms bzw. zur Erhöhung des Vordrucks, sondern die Regelpumpe erzeugt im Betriebszustand einen dem Vordruck entgegen wirkenden Begrenzungsdruck, so dass der vorgebbare Volumenstrom des Fluids in der Abströmleitung einstellbar ist, indem der Volumenstrom durch die Regelpumpe reduziert und nicht wie im Stand der Technik erhöht wird. Daher wir bevorzugt das Fluid bereits unter einem erhöhten Eingangsdruck bzw. Analgendruck dem erfindungsgemässen Strömungsregler zugeführt, bzw. der Strömungsregler, insbesondere die Regelpumpe und/oder der Vordruckregler werden für diese Erfordernisse entsprechend ausgelegt. Oder einfach ausgedrückt, die Regelpumpe pumpt gegen den vom Vordruckregler kommenden Volumenstrom und nicht gleichwirkend mit dem Volumenstrom wie die bekannten Strömungsregler aus dem Stand der Technik.

Dadurch ist es erstmals zuverlässig möglich, in einem Strömungssystem insbesondere auch bei kleinen Volumenströmen oder bei einem kleinen Vordruck ein ausreichend zuverlässiges Regelverhalten des Volumenstroms zu garantieren, wobei der Volumenstrom sogar genügend exakt auf null geregelt werden kann und es darüber hinaus prinzipiell sogar möglich ist, falls notwendig, die Flussrichtung des Volumenstroms im Strömungssystem umzukehren. Aber auch bei Volumenströmen mittlerer Grösse kann durch Verwendung eines erfindungsgemässen Strömungsreglers ein zuverlässiges bzw. annähernd lineares Regelverhalten garantiert werden.

Ausserdem besteht prinzipiell die Möglichkeit, bestehende Strömungssysteme einfach durch das Umdrehen der Regelpumpe oder den Austausch der Regelpumpe durch eine andere geeignete Regelpumpe, die gemäss der Erfindung im Gegenstrombetrieb betrieben werden kann, auf ein erfindungsgemässes Strömungssystem umzurüsten, so dass bestehende Anlagen nicht vollständig erneuert werden müssen, um die Vorteile des neuen erfindungsgemässen Strömungsreglers nutzen zu können. Es versteht sich, dass in diesem Fall in der Praxis eventuell die Regelansteuerungen entsprechend angepasst, in manchen Fällen ebenfalls ersetzt werden müssen.

Das ist nicht zuletzt auch deshalb möglich, weil eventuell negative Eigenschaften des Vordruckreglers durch die erfindungsgemässe Verwendung der Regelpumpe weitestgehend kompensiert werden können. Beziehungsweise, bei einem erfindungsgemässen Strömungsregler sind die Eigenschaften des Vordruckreglers weniger relevant als bei den aus dem Stand der Technik bekannten Strömungsreglern, weil bei einem erfindungsgemässen Strömungsregler der Volumenstrom nicht nur zuverlässiger sondern auch schneller auf die vorgegebenen Sollwerte stabilisierbar ist. Eben gerade weil die Regelpumpe gegen den Volumenstrom pumpt und somit ein System aus zwei gegeneinander wirkenden Prozessgrössen etabliert wird, die besser stabiliserbar auf einen vorgegebenen Sollwert stabilsierbar sind. Die erwähnten gegeneinander wirkenden Prozessgrössen sind dabei der durch den Anlagendruck generierte, in den Strömungsregler einlaufende Volumenstrom, dem die Regelpumpe durch den Begrenzungsdruck entgegenwirkt und nicht mit diesem gleichwirkt.

Das bedeutet unter anderem auch, dass ein erfindungsgemässer Strömungsregler nicht nur viel zuverlässiger und exakter arbeitet, sondern auch einfacher aufgebaut bzw. kostengünstiger bereitgestellt werden kann, weil z.B. sehr einfache Vordruckregler, beispielsweise einfache mechanische P-Regler verwendet werden können und somit nicht die Notwendigkeit zur Verwendung von meist sehr teuren elektronischen PI- oder PID Reglern besteht, die nicht nur teurer sind, sondern oftmals auch störanfälliger als robuste, einfach aufgebaute mechanische P-Regler sind.

Wie weiter unten noch näher erläutert wird, kann in der Praxis als Regelpumpe bevorzugt eine vollständig magnetisch gelagerte Kreiselpumpe verwendet werden, mit welcher besonders vorteilhaft der Volumenstrom von chemisch oder physikalisch hochaggressiven Flüssigkeiten, oder z.B. von biologisch oder medizinisch hochsensiblen Flüssigkeiten, oder auch der Volumenstrom von hochreinen Flüssigkeiten problemlos regelbar ist, ohne dass der Strömungsregler solche Flüssigkeiten negativ beeinträchtigt.

Bei einem bevorzugten Ausführungsbeispiel eines erfindungsgemässen Strömungsreglers ist der erste Sensor ein erster Durchflusssensor und die erste Strömungskenngrösse charakterisiert einen Fluidfluss des Fluids, wobei in einem anderen Ausführungsbeispiel zusätzlich oder alternativ der erste Sensor ein erster Drucksensor ist und die erste Strömungskenngrösse einen ersten Fluiddruck im Fluid charakterisiert. Oder einfach ausgedrückt, die Regelpumpe kann im Speziellen z.B. unter Verwendung eines Drucksensors oder unter Verwendung eines Durchflusssensors oder unter Umständen auch unter Verwendung eines anderen geeigneten Sensors gesteuert und / oder geregelt werden, wobei in der Praxis eventuell eine geeignete Eichung auf die Messgrösse des Sensors notwendig ist, was dem Fachmann aber im allgemeinen keine besonderen Schwierigkeiten bereitet.

Dabei kann der erste Sensor zum Beispiel nachgeordnet zum Niederdruckanschluss der Regelpumpe an der Abströmleitung vorgesehen sein und / oder der erste Sensor kann natürlich auch z.B. an der Strömungsverbindung zwischen dem Vordruckregler und der Regelpumpe vorgesehen sein. Einige für die Praxis mögliche Varianten der Anordnung der Sensoren werden beispielhaft im Rahmen der Zeichnungen weiter unten noch näher erläutert.

Je nach Anforderung kann z.B. an der Abströmleitung noch eine Zusatzpumpe, insbesondere eine einer Druckverstärkung dienende Kreiselpumpe als Boosterpumpe vorgesehen sein, mit welcher der Volumenstrom des Fluids weiter erhöht werden kann, sofern dies notwendig sein sollte. Die Boosterpumpe kann aber z.B. auch vor dem Vordruckregler angeordnet werden, so dass der Anlagendruck unter einem erhöhten Druck dem Vordruckregler über den Vordruckeingang zugeführt werden kann, wodurch nicht nur der Volumenstrom erhöht werden kann, sondern unter Umständen auch die Regelcharakteristik noch weiter verbessert werden kann.

Zur weiteren Verbesserung der Regelcharakteristik eines Strömungsreglers der vorliegenden Erfindung kann in der Abströmleitung nachgeordnet zur Zusatzpumpe noch mindestens ein zweiter Sensor zur Bestimmung eines zweiten Istwerts einer zweiten Strömungskenngrösse des Fluids vorgesehen sein, so dass in Abhängigkeit vom zweiten Istwert der zweiten Strömungskenngrösse eine Drehzahl der Zusatzpumpe mittels einer Zusatzansteuerung, eventuell unter Verwendung eines zweiten Sollwerts derart steuerbar und / oder regelbar sein, dass der vorgebbare Volumenstrom des Fluids in der Abströmleitung einstellbar ist. Dabei kann der zweite Sensor beispielweise ein zweiter Durchflusssensor sein und zum Einstellen des Volumenstroms kann die Regelansteuerung und die Zusatzansteuerung zum Einlesen des zweiten Istwert mit dem zweiten Durchflusssensor parallel signalverbunden sein, wobei die Regelansteuerung und die Zusatzansteuerung parallel mit einem gemeinsamen Sollwert gespeist werden können.

In einem weiteren Ausführungsbeispiel kann der zweite Sensor ein zweiter Drucksensor sein und zum Einstellen des Volumenstroms kann die Regelansteuerung und die Zusatzansteuerung zum Einlesen des zweiten Istwert mit dem zweiten Drucksensor parallel signalverbunden werden, so dass die Regelansteuerung und die Zusatzansteuerung parallel mit dem gemeinsamen Sollwert gespeist werden können.

Zur Einstellung des Vordrucks kann der Vordruckregler beispielsweise ein aktiver oder passiver Vordruckregler, insbesondere aber auch ein durch den ersten Sensor und / oder ein durch den zweiten Sensor beeinflusster aktiver Vordruckregler sein. Dabei kann der Vordrucksensor auch an der Zuströmleitung und / oder an der Strömungsverbindung und / oder an der Abströmleitung derart vorgesehen und mit dem aktiven Vordruckregler signalverbunden sein, dass der Vordruck aktiv einstellbar ist.

Wie an sich aus dem Stand der Technik bekannt, kann der Vordruckregler in der Praxis eine Druck reduzierende Einheit, insbesondere ein manueller Druckregler, ein pneumatischer Druckregler, ein elektrischer Druckregler, ein Proportionalventil oder eine andere geeignete Druck reduzierende Einheit sein.

Obwohl eine Regelpumpe eines erfindungsgemässen Strömungsreglers prinzipiell mit einer beliebigen Kreiselpumpe realisierbar ist, wird im folgenden eine besondere Klasse von Kreiselpumpen beschrieben, die von einem sogenannten lagerlosen Motor angetrieben werden, die insbesondere für ganz bestimmte Anwendungen bzw. bei der Förderung hochsensibler Flüssigkeiten, auf die später auch noch eingegangen werden wird, spezielle Vorteile bieten, die bei konventionell gelagerten Kreiselpumpen nicht verfügbar sind.

Eine solche spezielle Rotationspumpe oder Kreiselpumpe, wie z.B. bereits in der EP 0860046 A1 bzw. in der EP 0819330 A1 grundlegend offenbart, umfasst ein Gehäuse und ein innerhalb des Gehäuses angeordnetes Pumpenrad, bei welcher das Pumpenrad ein passives, magnetisch wirksames Rotorteil umfasst und das Gehäuse von einem elektrische Spulen und Zähne aufweisenden Stator umgeben ist, welche derart angeordnet, ausgestaltet und ansteuerbar sind, dass der Stator und der Rotorteil als ein sogenannter lagerloser Motor zusammenwirken.

Durch die Verwendung eines lagerlosen Motors im Sinne der vorliegenden Anmeldung ist der Rotorteil der Pumpe bezüglich dreier Freiheitsgrade aktiv ansteuerbar und sowohl die Lage des Rotorteils in einer senkrecht zur Drehachse verlaufenden Ebene in x- und y-Richtung als auch ein in Umfangsrichtung auf das Rotorteil bewirkte Drehmoment durch eine entsprechende Ansteuerung der elektrischen Spulen vorgebbar.

Dabei können das Rotorteil und die Zähne des Stators z.B. derart geometrisch gegenseitig angepasst ausgestaltet und zueinander angeordnet sein, dass das Rotorteil bezüglich dreier weiterer, nicht aktiv ansteuerbarer Freiheitsgrade, durch passiv wirkende Reluktanzkräfte im Stator haltbar ist, so dass der Rotor innerhalb des Gehäuses antreibbar und stabil berührungslos schwebend angeordnet ist. Ein Vorteil dieser Anordnung ist darin zu sehen, dass die Lage des Rotors bezüglich einer senkrecht zur Drehachse verlaufenden Ebene aktiv ansteuerbar ist, dass ein ansteuerbares Drehmoment auf den Rotor bewirkbar ist, und dass die Lage des Rotors bezüglich der weiteren drei Freiheitsgrade durch passiv wirkende magnetische Kräfte in einer stabilen Lage im Stator gehalten ist.

Dabei ist die Rotationspumpe z.B. in Form einer Axialpumpe oder einer Zentrifugalpumpe ausgebildet, wobei der Rotor entsprechend als ein Axialrad einer Axialpumpe oder als ein Zentrifugalrad einer Zentrifugalpumpe ausgebildet ist. Das magnetisch wirksame Rotorteil, der Bestandteil des Axialrades oder des Zentrifugalrades sein kann, ist in Richtung der Drehachse bzw. in axialer Richtung nur durch passiv wirkende magnetische Kräfte gehalten. Der Stator und das Rotorteil sind daher derart ausgestaltet, dass eine zum Betrieb der Rotationspumpe oder Kreiselpumpe genügend grosse, passiv wirkende magnetische Kraft auf den Rotor bewirkt wird. Dies kann durch eine entsprechende Ausgestaltung und geometrische Anordnung der magnetisch wirksamen Komponenten des Rotorteils und des Statorteils erzielt werden, indem zum Beispiel die Zähne des Statorteils in axialer Richtung etwa die gleiche Höhe aufweisen wie das Rotorteil und indem der Durchmesser des Rotorteils zumindest doppelt so gross ausgestaltet ist wie dessen Höhe in axialer Richtung, es sich also um ein "flaches Rotorteil" handelt. Die passiv wirkende magnetische Kraft in axialer Richtung kann zudem durch eine permanentmagnetische Vorspannung des Stators sowie des Rotorteils erhöht werden. Die Lagerkraft in axialer Richtung kann zudem durch zusätzliche Lagervorrichtungen wie ein hydrodynamisch wirkendes Lager erhöht werden, das z.B. durch die pumpende Flüssigkeit gebildet bzw. unterstützt wird. Zudem kann es sich als vorteilhaft erweisen, was aber nicht unbedingt notwendig ist, eine in axialer Richtung wirkende mechanische Lagervorrichtung vorzusehen, welche bei sehr grossen axialen Kräften als eine Notlauflagervorrichtung dient, um den Rotorteil in einer bestimmten Lage zu halten.

Unter einem lagerlosen Motor wie er bereits seit vielen Jahren erfolgreich in der Praxis Verwendung findet, versteht der Fachmann somit eine elektrisch ansteuerbare Lager- und Antriebsvorrichtung, welche einen Rotor sowie einen elektromagnetische Spulen aufweisenden Stator umfasst. Der Rotor des lagerlosen Motors ist nach den an sich bekannten Prinzipien elektrischer Maschinen antreibbar, also nach den Gesetzmässigkeiten eines Synchronmotors, eines Reluktanzmotors oder eines Induktionsmotors. Der Rotor des lagerlosen Motors ist zumindest in einer senkrecht zur Drehachse verlaufenden Ebene durch magnetisch wirkende Kräfte berührungslos im Stator gehalten. Die elektromagnetischen Spulen sind derart ansteuerbar, dass die Lage des Rotors in einer senkrecht zur Drehachse des Rotors verlaufenden Ebene aktiv beeinflussbar ist. Die Lage des Rotors wird mit Sensoren überwacht und die elektromagnetischen Spulen mit einer entsprechend ausgestalteten Ansteuervorrichtung derart regelbar angesteuert, dass der Rotor bezüglich der senkrecht zur Drehachse des Rotors verlaufenden Ebenen berührungslos im Stator gehalten ist. Zudem kann über eine entsprechende Ansteuerung der elektromagnetischen Spulen des Stators ein Drehmoment auf den Rotor erzeugt werden, so dass dieser eine Rotation um dessen axiale Achse erfährt. Ein derartiger sogenannter lagerloser Motor kann somit einen Rotor bezüglich dreier Freiheitsgrade, nämlich der Lage in x- und y-Richtung sowie der Rotation um dessen Achse, aktiv ansteuern. Ein lagerlose Motor aufweisend diese Eigenschaften kann durch unterschiedliche Konstruktionsformen ausgestaltet sein.

Ein solcher lagerloser Motor kann zum Beispiel als ein Reluktanzmotor ausgestaltet sein, indem der Rotor zum Beispiel kreuzförmig ausgestaltet ist, und der Stator aus einer Mehrzahl von in radialer Richtung verlaufenden, in Umfangsrichtung um dem Rotor angeordneten, elektrisch einzeln ansteuerbaren Spulen ausgestaltet ist. Diese Spulen sind bevorzugt derart ansteuerbar, dass der Rotor bezüglich einer senkrecht zur Drehachse verlaufenden Ebene in der Schwebe gehalten wird, und der Rotor zudem um dessen Drehachse rotierend antreibbar ist, indem mit den Spulen ein magnetisches Drehfeld erzeugt wird.

Ein lagerloser Motor kann aber auch zum Beispiel ähnlich einem Synchronmotor ausgestaltet sein, indem der Rotor ein in radialer Richtung verlaufenden Permanentmagnet aufweist, und der Stator eine Drehfeldwicklung, auch als eine Antriebswicklung bezeichnet, zur Erzeugung eines Drehfeldes aufweist, welches den Rotor um dessen Drehachse rotierend antreibt. Zudem kann der Stator eine separate Steuerwicklung aufweisen, um die Lage des Rotors in einer senkrecht zur Drehachse verlaufenden Ebene anzusteuern, wobei die Lage der Rotors bzw. der magnetische Fluss mit Sensoren erfasst wird und die Steuerwicklung über eine Ansteuervorrichtung derart angesteuert werden, dass der Rotor in der senkrecht zur Achse des Stators verlaufenden Ebene berührungslos im Stator gehalten wird.

Eine entsprechend mit einem solchen lagerlosen Motor ausgestattete Kreisel- oder Rotationspumpe, ausgestaltet als eine Axialpumpe oder eine Zentrifugalpumpe, ist insbesondere geeignet zum Fördern von hochreinen, aggressiven, explosiven oder toxischen Fluiden und Flüssigkeiten und ist ebenfalls z.B. als Blutpumpe besonders geeignet.

Auf Grund der berührungslosen Lagerung ist der Rotor z.B. mit einer sehr hohen Drehzahl betreibbar, so dass die Rotationspumpe auch bei sehr kleinen Baugrössen eine hohe Förderleistung aufweist. Ein weiterer Vorteil einer solchen Rotationspumpe ist darin zu sehen, dass der Rotor auch mit einer zeitlich variablen Drehzahl betreibbar ist, und das Fluid sogar pulsierend förderbar ist, was andererseits insbesondere aber auch bedeutet, dass eine solche Pumpe schnell regelbar ist und somit auch z.B. schnelle Druckschwankungen im Strömungssystem mit einem eine solche Pumpe umfassenden erfindungsgemässen Strömungsregler problemlos ausgeregelt werden können. Die Drehzahl des Rotors ist zwischen dem Stillstand und einer sehr hohen Drehzahl frei ansteuerbar, sodass die Rotationspumpe bezüglich der Fördermenge eine grosse Dynamik aufweist und sowohl sehr geringe als auch sehr grosse Fluidmengen förderbar sind, wodurch eine hohe Dynamik und Regelgenauigkeit des erfindungsgemässen Strömungsreglers zusätzlich positiv beeinflusst wird.

Aber nicht nur die Regelcharakteristik eines erfindungsgemässen Strömungsreglers wird durch Verwendung eines lagerlosen Motors sehr positiv beeinflusst. Wie erwähnt eignen sich Kreiselpumpen, die auf dem Prinzip des lagerlosen Motors basieren, besonders gut um sensible oder hochreine Flüssigkeiten, wie beispielweise Blut zu fördern, das, wie verschiedene andere biologische oder technische Flüssigkeiten auch, eine Flüssigkeit ist, die auch auf mechanische Einwirkungen ausgesprochen sensibel reagiert.

So müssen bei sensiblen Flüssigkeiten wie Blut oder hoch reinen pharmazeutischen, biologischen oder chemischen Produkten unbedingt Verunreinigungen vermieden werden. Derartige Verunreinigungen können zum Beispiel bei einem konventionellen mechanischen Lager auftreten, die in Form von Lagerschmierstoffen oder mechanischem Abrieb zu Verunreinigungen des Fluids im Strömungssystem führen können.

Ist das Strömungssystem z.B. ein Ventrikel Unterstützungssystem zur Unterstützung eines menschlichen oder tierischen Blutkreislaufs, also ein Strömungssystem aus Blutpumpe, Kanülen und Zuleitungen, welches zum Beispiel während einer Operationen einen Bypass für das Herz bildet oder in einer Langzeitanwendung ein geschwächtes Herz entlastet, so ist die Durchflussmenge also der Volumenstrom des Blutes eine sehr kritische Systemgrösse, die ständig überwacht und durch geeignete Steuerung sensibel nachgeregelt werden muss. In einem solchen Strömungssystem ist die Einstellung eines vorgegebenen Volumenstroms des Blutes in Bezug auf verschiedene Aspekte eine besonders kritische Herausforderung.

Kommt es zum Beispiel zu Engstellen und / oder zu einer lokal starken mechanischen Belastung im Ventrikel Unterstützungssystem, z.B. zu einer Kompression des Bluts zwischen einem Flügelrad und dem Gehäuse einer Pumpe im Strömungssystem so kann eine Zerstörung oder Quetschung der roten Blutkörperchen resultieren oder es kann zu Anlagerungen und / oder Ablagerungen von Blut, im schlimmsten Fall sogar zu Verklumpungen des Bluts führen, was zu schweren Schädigungen des Patienten, wie Thrombosen, Gefässverschlüssen und sogar zum Infarkt, im schlimmsten Fall zum Tod des Patienten führen kann.

Die Verwendung der lagerlosen Motoren als Antrieb für die Pumpen schliesst ein solches Risiko gänzlich aus, da der Rotor der Pumpe im Gehäuse frei schwebt, es keine mechanischen Lager gibt und daher die Gefahr einer Quetschung der Flüssigkeit praktisch ausgeschlossen ist.

Auch können die Regelpumpe, Zusatzpumpe, sowie alle oder ein Teil der Verbindungsleitungen, der Druckregler und eventuell sogar die Sensoren oder weitere Komponenten eines erfindungsgemässen Strömungsreglers als Einmalteil oder Wegwerfprodukt ausgestaltet sein.

Unter einem Einmalteil oder Wegwerfteil wird im Rahmen dieser Anmeldung ein Teil verstanden, dass nur zum einmaligen Gebrauch bestimmt ist und nach einmaligem Gebrauch nicht gereinigt, nicht wieder sterilisiert oder in anderer Weise wiederhergestellt wird, sondern nach einmaliger Benutzung für seinen Bestimmungszweck nicht wieder benutzt wird, sondern in der Regel nach einmaligem Gebrauch entsorgt wird. Der Strömungsregler oder bestimmte Komponenten des Strömungsreglers sind insbesondere dann vorteilhaft als Einmalteile oder Wegwerfprodukte ausgebildet, wenn der Strömungsregler für hochreine oder sensible Flüssigkeiten wie hochreine pharmazeutische, biologische oder medizinische Flüssigkeiten verwendet wird. Vor allem wenn Querkontaminationen unbedingt zu verhindern sind, so das eine einmal für eine erste Flüssigkeit verwendete Komponente des Strömungsreglers für eine zweite Flüssigkeit nicht mehr verwendet werden darf bzw. wenn die Reinigung, Sterilisierung oder ganz allgemein die Wiederherstellung der entsprechenden eine so grossen Aufwand bedeuten würde, das dieser technisch nicht sinnvoll ist bzw. sich wirtschaftlich nicht lohnt.

Wie dem Fachmann wohl bekannt ist, werden entsprechende Einmalteile, Eimalprodukte oder Wegwerfprodukte (Begriffe, die im Rahmen dieser Anmeldung synonym zu verstehen sind), wie sie beispielweise sehr häufig in Bioreaktoranlagen z.B. gemäss EP 1087010 A1 oder anderen Anlagen verwendet werden, besonders bevorzugt aus billigen Werkstoffen wie geeigneten, im Speziellen biokompatiblen und/oder kostengünstigen Kunststoffen wie z.B. Polypropylen, Polyethylen, Polyvinylchlorid (PVC) oder Polycarbonat, die sich z.B. unter Verwendung von Spritzgussverfahren usw. sehr günstig verarbeiten lassen, hergestellt. Weniger geeignet sind teure Fluoropolymere wie PTFE oder PFA. Dabei ist nicht nur der hohe Preis nachteilig, sondern dass bei der Gamma Sterilisierung solcher Fluoropolymere auch giftige Stoffe wie z.B. Flusssäure entstehen können. Abgesehen von Kunststoffen aller Art kennt der Fachmann natürlich noch eine Vielzahl anderer günstiger Materialien, die sich zur Herstellung von Einmalprodukten eignen. Ausserdem müssen solche Einmalprodukte auch häufig sterilisiert werden, was in der Praxis oft vorteilhaft unter Verwendung von radioaktiven Gammastrahlen, Hitze, durch chemische Verfahren oder mit anderen dem Fachmann bekannten Methoden erfolgt. D.h. die verwendeten Materialien müssen natürlich die entsprechenden oft auch materialbeanspruchenden Prozeduren mindestens einmal unbeschadet überstehen. Anderseits sind Einmalteile oder Einmalprodukte nicht zwangsläufig aber sehr häufig auch dadurch gekennzeichnet, das sie die entsprechenden Sterilisierungsverfahren nur ein einziges mal überstehen können ohne soweit geschädigt zu werden, dass sie unbrauchbar werden. Somit ist auch dies ein klares Kennzeichen für ein Wegwerfteil bzw. ein Einmalprodukt. Ein Einmalprodukt wird auch steril verpackt und so an den Kunden ausgeliefert. Demgegenüber sind Komponenten, die aus relativ teuren Materialen gefertigt sind und für eine mehrfache Sterilisierung designet sind, nicht als Einmalprodukte zu verstehen.

Im Falle eines erfindungsgemässen Strömungsreglers ist insbesondere ist die Regelpumpe oder die Zusatzpumpe als Einmalpumpe bzw. sind Teile davon als Einmalteile ausgebildet. Dadurch entfällt insbesondere die aufwändige Sterilisierung für einen weiteren Gebrauch, weil die Teile eben nur einmal verwendet werden.

Bei einem vorteilhaften Ausführungsbeispiel sind die Einmalteile der Regelpumpe oder Zusatzpumpe in Form als Einmalpumpe aus einem Kunststoff hergestellt sind, weil solche Teile mit grosser Zuverlässigkeit wirtschaftlich hergestellt werden können, beispielsweise durch Spritzgiessverfahren, wie bereits erwähnt wurde.

Dabei umfasst die Einmalpumpe bevorzugt ein Pumpengehäuse, in welchem ein Pumpenrad angeordnet ist, sowie einen separaten Antriebsstator, in welchen das Pumpengehäuse mitsamt dem darin angeordneten Pumpenrad einsetzbar ist. Das Gehäuse mitsamt dem darin angeordneten Pumpenrad ist dabei als Einmalteil ausgebildet. Dieses Ausführungsbeispiel ist insofern besonders vorteilhaft, als sämtliche "kontaminierbaren Teile", nämlich das Pumpengehäuse (Innenwand) sowie das darin angeordnete Pumpenrad nach jeder Anwendung auf einfachste Art und Weise ausgewechselt werden können, und die aufwändigeren Teile (elektrische Versorgung des Antriebs, etc.) erhalten werden und für die nächste Anwendung wiederverwendet werden können, ohne dass irgendeine Gefahr der Kontaminierung besteht. Im übrigen stellt der elektrische Antrieb nicht nur von der technischen, sondern auch von der wirtschaftlichen Seite her den aufwändigsten Teil der Pumpe dar. Dieser muss aber nicht ersetzt werden, sondern nur das wenig aufwändige Pumpengehäuse mit dem darin befindlichen Pumpenrad.

Bei einer vorteilhaften Weiterbildung dieses Ausführungsbeispiels sind in dem Pumpenrad Permanentmagnete angeordnet, die dann zusammen mit dem vom Antriebsstator erzeugten elektromagnetischen Feld den Antrieb des Pumpenrads besorgen.

Selbstverständlich ist ein lagerloser Motor zum Antrieb der Regelpumpe oder der Zusatzpumpe nicht nur in solchen Fällen von Vorteil in denen sich Einmalprodukte zur Verwendung empfehlen. Andere Beispiele finden sich im Zusammenhang mit speziellen industriellen Prozessen. Beispielsweise in der Halbleiter- und Chip-Herstellung besteht die Notwendigkeit bestimmte Oberflächen von Substraten, zum Beispiel die Oberfläche von Wafern für die Herstellung elektronischer Bauteile mit Suspensionen in kontrollierter Weise zu beaufschlagen um deren Oberflächen zu bearbeiten. Als ein wichtiges Beispiel seien hier chemisch-mechanische Polierprozesse (CMP, chemicalmechanical planerisation, Reinigen und / oder Ätzen von Wafern oder das entfernen von Fotolack mit Lösungsmitteln, auch Polymer Removal genannt) genannt, wie sie z.B. in der Halbleiterindustrie eingesetzt werden.

In den entsprechenden Anlagen, in welchen solche Prozesse durchgeführt werden, spielt die zuverlässige Einstellung der Volumenströme der vorgenannten Prozessflüssigkeiten eine wichtige Rolle.

Auch hier hat die Verwendung der beschriebenen lagerlosen Motoren als Antrieb für die Regelpumpe und / oder die Zusatzpumpe eines erfindungsgemässen Strömungsreglers enorme Vorteile. Da es keine mechanischen Lager gibt, besteht auch nicht die Gefahr, dass die mechanischen Lager durch physikalisch oder chemisch aggressive Flüssigkeiten wie Slurries, Lacke, Säuren, Laugen oder andere aggressive Flüssigkeiten angegriffen bzw. zerstört werden.

Aber auch für die weiter oben erwähnten hochreinen Flüssigkeiten eignen sich solche Pumpen hervorragend, da es keinen Abrieb im Lager geben kann und keine geschmierten Lagerachsen vorahnden sind, durch die die zu pumpende Flüssigkeit kontaminiert werden könnte.

Dies sind nur einige wenige prominente Beispiele, die eine von einem lagerlosen Motor angetriebene Pumpe klar vor bekannten konventionell gelagerten Pumpen zur Verwendung in einem erfindungsgemässen Strömungsregler favorisieren.

Die Regelpumpe und / oder die Zusatzpumpe als solches ist dabei eine Kreiselpumpe und besonders bevorzugt als eine Zentrifugalpumpe, oder eine Axialflusspumpe, oder eine Seitenkanalpumpe, oder eine Diagonalflusspumpe oder eine andere Kreiselpumpe ausgebildet.

Darüber hinaus betrifft die Erfindung ein Verfahren zum Einstellen eines vorgebbaren Volumenstroms mit einem Strömungsregler der Erfindung.

Im Folgenden wird die Erfindung an Hand der schematischen Zeichnung näher erläutert. Es zeigen:
- Fig. 1: ein aus dem Stand der Technik bekannter Strömungsregler;
- Fig. 2: ein an sich bekannter passiver Vordruckregler;
- Fig. 3a: ein erstes bevorzugtes Ausführungsbeispiel eine erfindungsgemässen Strömungsreglers mit Durchflusssensor;
- Fig. 3b: ein zweites Ausführungsbeispiel gemäss Fig. 3a mit einem Drucksensor;
- Fig. 4a: ein anderes Ausführungsbeispiel eines erfindungsgemässen Strömungsreglers mit einem Durchflusssensor vor der Regelpumpe;
- Fig. 4b: ein weiteres Ausführungsbeispiel gemäss Fig. 4a mit einem Drucksensor;
- Fig. 5a: ein Ausführungsbeispiel mit Boosterpumpe und zwei Drucksensoren;
- Fig. 5b: eine zweite Variante gemäss Fig. 5a mit einem Drucksensor und einem Durchflusssensor;
- Fig. 5c: eine andere Variante gemäss Fig. 5b;
- Fig. 6a: eine weitere Ausführungsvariante mit Boosterpumpe und parallel gekoppelten Regelungen;
- Fig. 6b: eine zweite Ausführungsvariante gemäss Fig. 6a mit einem Drucksensor;
- Fig. 7: schematisches Durchfluss - Drehzahl Diagramm des erfindungsgemässen Strömungsreglers;
- Fig. 8a: schematisch einen Längsschnitt durch eine Axialpumpe;
- Fig. 8b: schematisch einen Längsschnitt durch eine Zentrifugalpumpe;
- Fig. 8c: einen Schnitt durch einen Stator und ein magnetisch wirksames Rotorteil der Axial- oder Zentrifugalpumpe gem. Fig. 8a oder Fig. 8b;

Die Fig. 1 und 2 beziehen sich zum besseren Verständnis der Erfindung auf den bekannten Stand der Technik und wurden bereits oben ausführlich besprochen, so dass sich hier eine weitere Diskussion erübrigt.

Fig. 3a zeigt in einer schematischen Darstellung ein besonders bevorzugtes und gleichzeitig einfaches Ausführungsbeispiel eines Strömungssystems 100 mit einem erfindungsgemässen Strömungsregler, das im folgenden gesamthaft mit dem Bezugszeichen 1 bezeichnet wird.

Der Fachmann versteht, dass allen Merkmalen, die mit dem gleichen Bezugszeichen versehen sind, in den verschiedenen Figuren jeweils die analoge technische Bedeutung zukommt, so dass nicht alle funktionalen oder technischen Zusammenhänge bei der Beschreibung der verschiedenen Figuren jeweils immer wieder wiederholt werden müssen. Der Fachmann weiss ohne Weiteres, wie er die Beschreibung eines technischen Details von einer Figur auf eine andere analog korrekt übertragen kann.

Der Strömungsregler 1 gemäss Fig. 3a zum Einstellen eines vorgebbaren Volumenstroms VS eines Fluids F in einem Strömungssystem 100 umfasst einen ersten Sensor SF1 zur Bestimmung eines ersten Istwerts IW1 einer ersten Strömungskenngrösse KF1 des Fluids F, einen Vordruckregler 2 zum Einstellen eines vorgebbaren Vordrucks PV an einem Vordruckausgang 22 des Vordruckreglers 2, sowie eine Regelpumpe 3 in Form einer Kreiselpumpe. Dabei wird das Fluid F im Betriebszustand unter einem Anlagendruck PA im über eine Zuströmleitung 20 und einen Vordruckeingang 21 dem Vordruckregler 2 zugeführt und unter dem Vordruck PV über eine zwischen dem Vordruckausgang 22 und der Regelpumpe 3 vorgesehenen Strömungsverbindung 4 zu der Regelpumpe 3 weitergeleitet. Gemäss der Erfindung ist der Vordruckausgang 22 über die Strömungsverbindung 4 mit einem Hochdruckanschluss 31 der Regelpumpe 3 strömungsverbunden, so dass das Fluid F vom Vordruckregler 2 der Regelpumpe 3 zuführbar und über einen Niederdruckanschluss 32 aus der Regelpumpe 3 in eine Abströmleitung 5 wieder abführbar ist.

Das ist der entscheidende Unterschied zu den aus dem Stand der Technik bekannten Strömungsreglern 1', denen die vorliegende Erfindung insbesondere deshalb weit überlegen ist, weil mit dem erfindungsgemässen Strömungsregler 1 eine viel höhere Regelgenauigkeit erreichbar ist, insbesondere auch genügend genau auf einen verschwindenden Volumenstrom VS geregelt werden kann und die Strömungsrichtung des Volumenstroms VS im Bedarfsfall im Strömungssystem 100 sogar umgekehrt werden kann.

Zur Einstellung des vorgebaren Volumenstroms VS wird in Abhängigkeit vom ersten Istwert IW1 der ersten Strömungskenngrösse KF1 eine Drehzahl der Regelpumpe 3 mittels einer Regelansteuerung 6 unter Verwendung eines ersten Sollwerts SW1 derart vorgegeben, dass durch die Regelpumpe 3 ein dem Vordruck PV entgegen wirkender Begrenzungsdruck PB erzeugbar ist, wie durch den mit PB bezeichneten Pfeil im Symbol der Regelpumpe angedeutet wird, so dass der vorgebbare Volumenstrom VS des Fluids F in der Abströmleitung 5 wie vorgegeben einstellbar ist. Bei dem speziellen Ausführungsbeispiel der Fig. 3a ist der erste Sensor SF1 ein erster Durchflussensor SF1 ist und die erste Strömungskenngrösse KF1 charakterisiert einen Fluidfluss KF1 des Fluids F.

Eine bleibende Regelabweichung des Vordruckreglers 2 wird durch die Durchflussregelung mit der Regelpumpe 3 im wesentlichen eliminiert und der Volumenstrom VS am Ausgang des Strömungssystems 100 kann bis auf einen verschwindenden Wert von 0 L/min heruntergeregelt werden. Der erfindungsgemässe Strömungsregler 1 hat einen ausserordentlich hohen Durchflussregelbereich, eine hohe Regeldynamik und ist äusserst robust gegen Druckschwankungen des Anlagendrucks PA des Versorgungssystems.

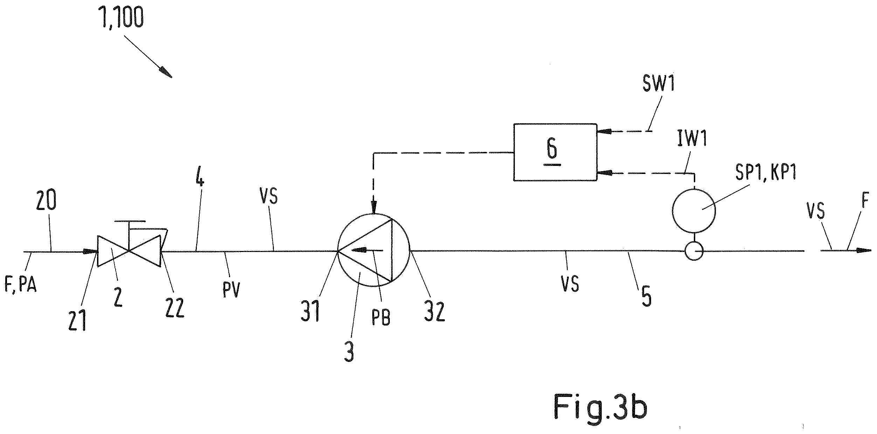

Das spezielle Ausführungsbeispiel der Fig. 3b unterscheidet sich von demjenigen der Fig. 3a lediglich dadurch, dass der erste Sensor SP1 ein erster Drucksensor SP1 ist und die erste Strömungskenngrösse KP1 einen ersten Fluiddruck KP1 im Fluid F charakterisiert. Der Fachmann versteht sofort, dass im Prinzip auch andere Sensoren als Durchflusssensoren oder Drucksensoren verwendet werden können, sofern deren Messgrössen für eine zuverlässige Steuerung und /oder Regelung der Regelpumpe 3 geeignet umgerechnet werden können. Dabei kann beim Aufbau gemäss Fig. 3b eine bleibende Regelabweichung des Vordruckreglers 2 durch die Druckregelung mit der Regelpumpe 3 im Wesentlichen eliminiert werden und der Druck am Ausgang des Strömungssystems 100 bis auf einen verschwindenden Druck von 0 Bar heruntergeregelt werden. Eine hohe Regeldynamik sowie eine hohe Robustheit gegen Druckschwankungen des Analgendrucks PA des Versorgungssystems Kennzeichnen nicht nur das Ausführungsbeispiel gemäss Fig. 3b zusätzlich.

In der Praxis ist das Fluid F praktisch immer eine im Wesentlichen inkompressible Flüssigkeit, wie z.B. Wasser, ein Öl, eines Slurry zum polieren von Halbleiter Wafern, eine medizinische oder biologische Flüssigkeit wie zum Beispiel Blut, oder jede andere im Wesentlichen inkompressible Flüssigkeit.

Prinzipiell ist es dabei nicht ausgeschlossen, den erfindungsgemässen Strömungsregler 1 auch zur Einstellung eines Volumenstroms VS eines mehr oder weniger kompressiblen Fluids F zu verwenden. Allerdings werden dann für eine korrekte Steuerung und / oder Regelung zusätzliche, dem Fachmann an sich bekannte Massnahmen wie Eichungen der Sensormesswerte, die Verwendung anderer bzw. zusätzlicher Sensoren usw. notwendig sein. Ungeachtet dessen ist die Erfindung nicht auf die Verwendung inkompressibler Flüssigkeiten beschränkt, auch wenn das in der Praxis das Hauptanwendungsgebiet der Erfindung sein wird.

Insbesondere im Falle von im wesentlichen inkompressiblen Fluiden F spielt es grundsätzlich keine wesentliche Rolle wo genau im Strömungssystem der Fluidsensor vorgesehen wird, da der Volumenstrom im Falle einer inkompressiblen Flüssigkeit in einem geschlossenen Strömungssystem 100, das keine zusätzlichen Zu- oder Abflüsse für das Fluid, z.B. in Form von Zwischenreservoiren oder anderen Quellen oder Senken für das Fluid umfasst, überall gleich sein muss. Abgesehen selbstverständlich von eher kleinen Effekten, wie Verzögerungseffekten, z.B. aufgrund von schnellen Druckschwankungen oder ähnlichen oder anderen verhältnismässig schnellen Störungen im System, die der Fachmann bei der Auslegung der Regelung aber entsprechend zu berücksichtigen weiss.

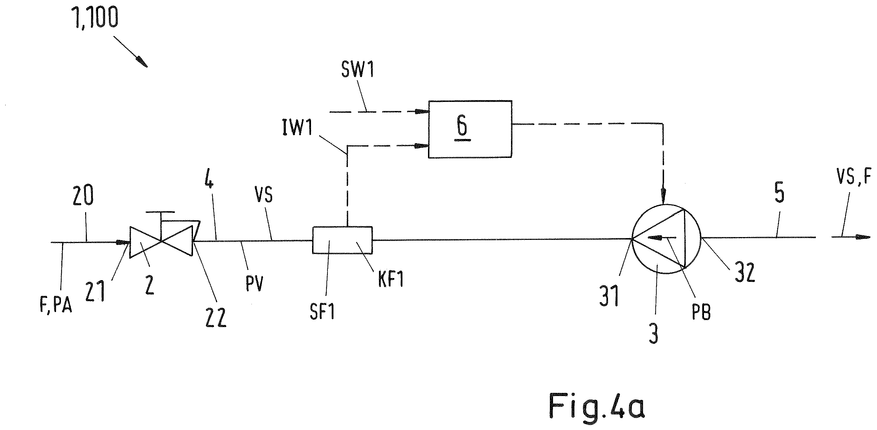

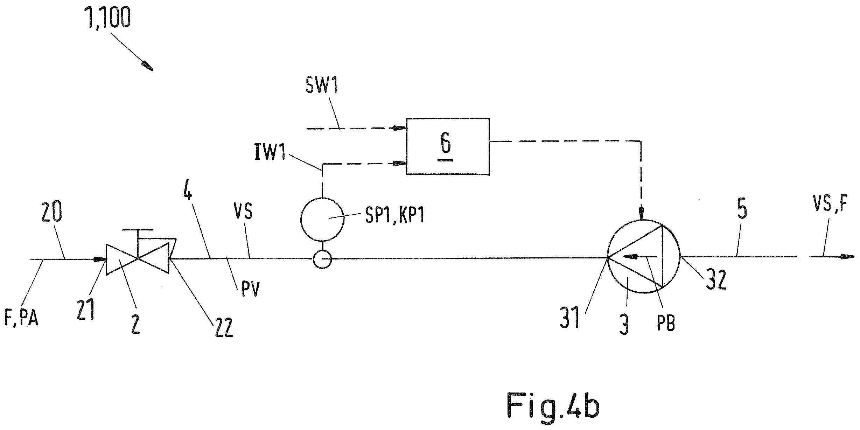

Auch ein Drucksensor kann im Prinzip an unterschiedlichen Stellen des Strömungssystems vorgesehen werden. Der Fachmann muss dies bei der Eichung der Steuerung oder Regelung nur entsprechend berücksichtigen. Daher sind auch die speziellen Ausführungsbeispiele gemäss den Fig. 4a bzw. Fig. 4b in der Praxis ohne weiteres realisierbar. Die Fig. 4a und Fig. 4b unterscheiden sich von den Fig. 3a bzw. Fig. 3b lediglich dadurch, dass der erste Durchflusssensor SF1 bei Fig. 4a zwischen dem Vordruckregler 2 und der Regelpumpe 3 vorgesehen ist, während der erste Durchflusssensor SF1 im Ausführungsbeispiel der Fig. 3a stromabwärts zur Regelpumpe 3 angeordnet ist. Analog dazu ist in Fig. 4b der erste Drucksensor SP1 zwischen dem Vordruckregler 2 und der Regelpumpe 3 vorgesehen, während der erste Drucksensor SP1 im Ausführungsbeispiel der Fig. 3b stromabwärts zur Regelpumpe 3 angeordnet ist.

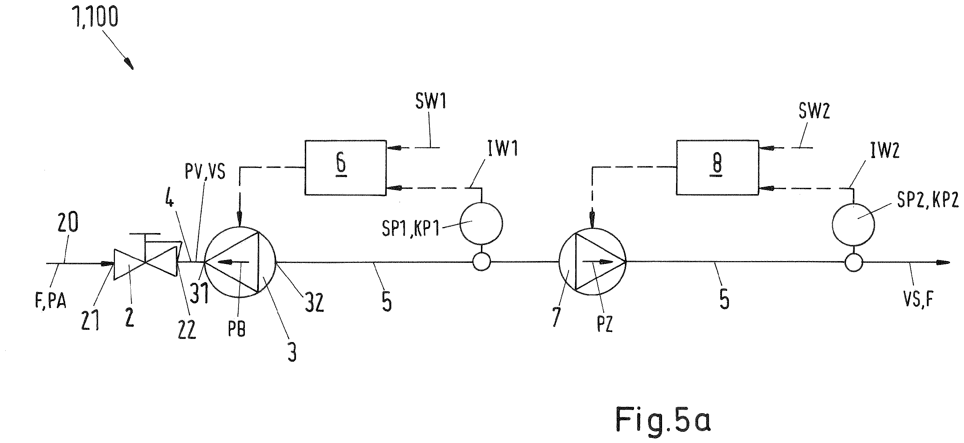

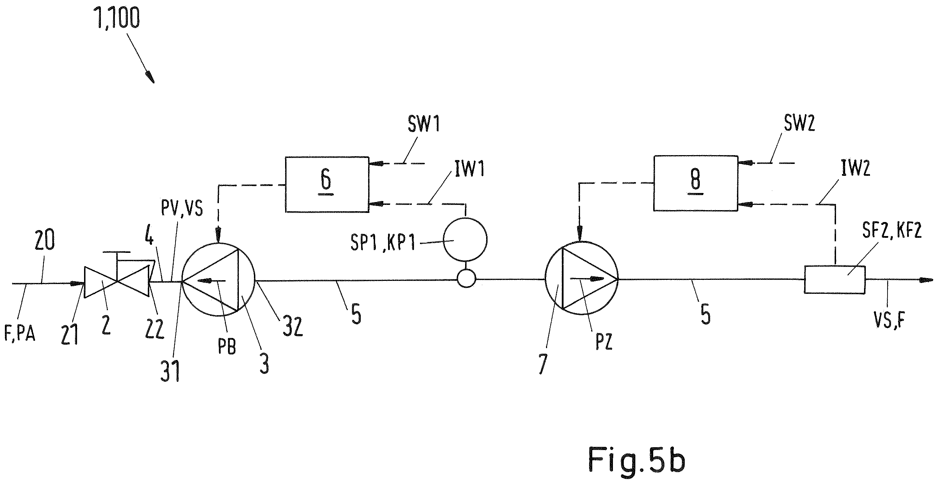

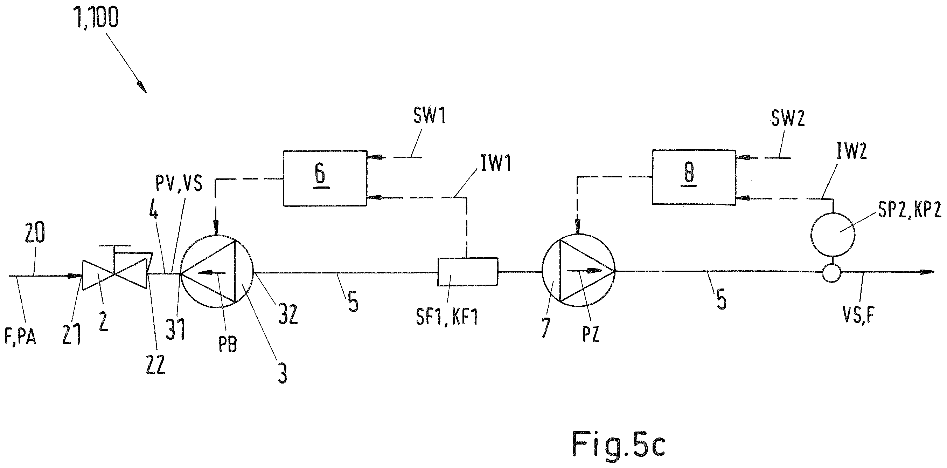

Die Fig. 5a, Fig. 5b, und Fig. 5c zeigen jeweils eine weitere Ausführungsvariante mit einer Zusatzpumpe 7 in Funktion einer Druck verstärkenden Boosterpumpe, wobei die Ansteuerung der Zusatzpumpe 7 und der Regelpumpe 3 getrennt über jeweils einen eigenen Sensor SP1, SF1 bzw. Sp2, SF2 mit Regelansteuerung 6 für die Regelpumpe 3 und separater Zusatzansteuerung 8 für die Zusatzpumpe 7 erfolgt. An der Abströmleitung 5 nachgeordnet zur Zusatzpumpe 7 ist dabei jeweils ein zweiter Sensor SF2, SP2 zur Bestimmung eines zweiten Istwerts IW2 einer zweiten Strömungskenngrösse KF2, KP2 des Fluids F vorgesehen, so dass in Abhängigkeit vom zweiten Istwert IW2 der zweiten Strömungskenngrösse KF2, KP2 eine Drehzahl der Zusatzpumpe 7 mittels der Zusatzansteuerung 8 unter Verwendung eines zweiten Sollwerts SW2 derart steuerbar und / oder regelbar ist, dass der vorgebbare Volumenstrom VS des Fluids F in der Abströmleitung 5 auf den vorgegeben Wert einstellbar ist.

Derartige und ähnliche erfindungsgemässen Ausführungsvarianten gem. Fig 5a - Fig. 5c sind für spezielle Anforderung in der Praxis konzipiert. So eignet sich das Ausführungsbeispiel gemäss Fig. 5a besonders gut für solche Anwendungen, in welchen der Druck am Ausgang des Strömungssystems 100 besonders genau geregelt werden muss, insbesondere dann, wenn sehr kleine, fast verschwindende Drücke in der Nähe von 0 Bar mit hoher Auflösung zuverlässig gesteuert und / oder geregelt werden sollen. Die Ausführungsvarianten gemäss Fig. 5b bzw. gemäss Fig. 5c sind dagegen gleichzeitig für eine optimale Druck- und Durchflusseinstellung besonders geeignet. Dabei ist die Variante gemäss Fig. 5b neben einer hohen Regelauflösung bezüglich des Drucks zusätzlich auf eine sehr hohe Regelgenauigkeit in Bezug auf einen verschwindenden oder nahezu verschwindenden Volumenstrom VS am Ausgang des Strömungssystems 100 optimiert. Das Ausführungsbeispiel gemäss Fig. 5c gewährleistet neben einer sehr guten Regelauflösung in Bezug auf den Volumenstrom VS gleichzeitig eine hohe Regelauflösung, insbesondere bezügliche eines verschwindenden oder nahezu verschwindenden Drucks am Ausgang des Strömungssystems 100.

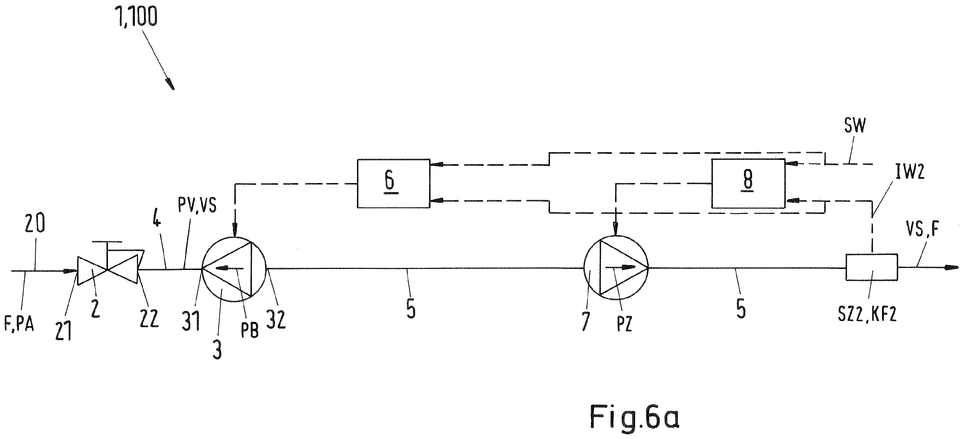

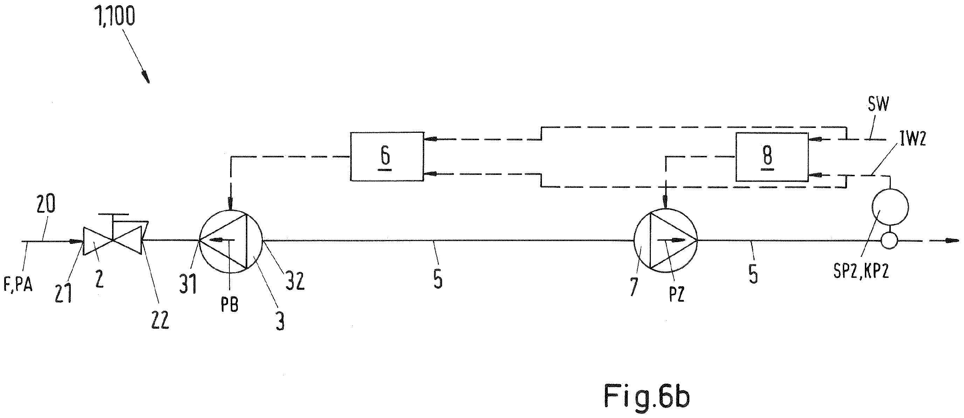

Die Fig. 6a und Fig. 6b zeigen je eine weitere Ausführungsvariante mit Boosterpumpe, wobei hier die Regelansteuerung 6 für die Regelpumpe 3 und die Zusatzansteuerung 8 für die als Boosterpumpe ausgestaltete Zusatzpumpe 7 parallel gekoppelt sind und mit den Messdaten von nur einem gemeinsam genutzten Sensor SF2, SP2 gespeist werden, wobei im Ausführungsbeispiel gemäss Fig. 6a als Sensor der zweite Durchflusssensor SF2 verwendet wird, während im Ausführungsbeispiel gemäss Fig. 6b als Sensor der zweite Drucksensor SP2 zum Einsatz kommt.

Auch bei den Ausführungsbeispielen gemäss Fig. 6a und Fig. 6b kann eine bleibende Regelabweichung des Vordruckreglers 2 wie bereits früher erläutert durch die Durchflussregelung mit der Regelpumpe 3 eliminiert werden. Während insbesondere beim Beispiel gem. Fig. 6a der Volumenstrom am Ausgang des Strömungssystems auf einen verschwindenden Volumenstrom nahe bei oder ganz auf null (bis auf 0L/min) oder sogar auf umgekehrten Volumenstrom geregelt werden kann, ist die Variante gemäss Fig. 6b besonders gut geeignet um den Druck am Ausgang des Strömungssystems auf einen verschwindenden Druck nahe bei oder ganz auf null (bis auf 0 Bar) herunter zu regeln. Auch diese beiden Ausführungsvarianten haben eine hohe Regeldynamik und sind ausserordentlich robust gegenüber Schwankungen des Anlagendrucks PA des Versorgungssystems.

Dabei profitieren beide Ausführungsvarianten von einer Stellgrössenerweiterung durch die zur Regelpumpe 3 in Serie geschaltete Zusatzpumpe 7, wobei bei dem Ausführungsbeispiel gemäss Fig. 6a bei Sollunterschreitung des Volumenstroms zusätzlich Druck erzeugt wird und bei dem Ausführungsbeispiel gemäss Fig. 6b bei Sollunterschreitung eines Sollwerts des Anlagendrucks PA des Versorgungssystems zusätzlich Druck erzeugt wird.

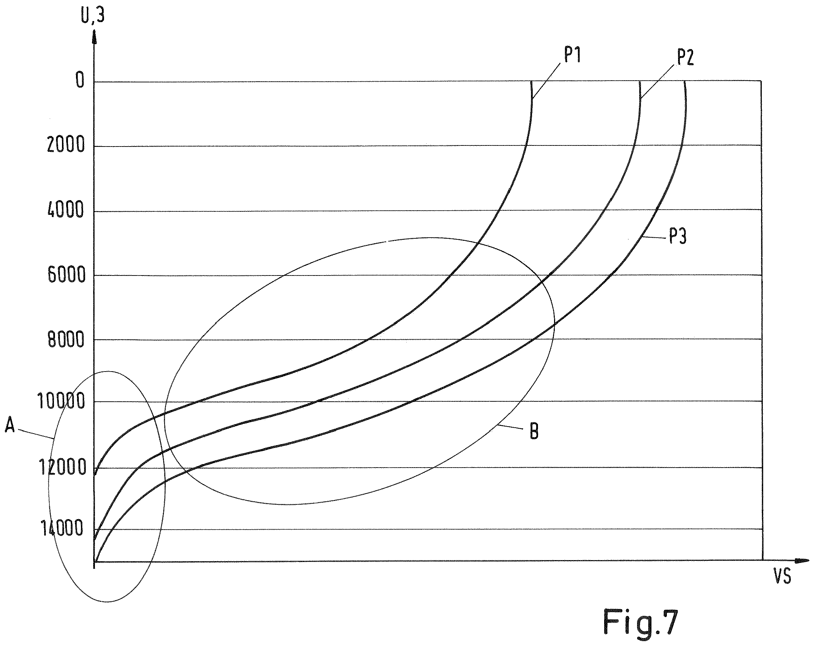

Anhand der schematischen Fig. 7 lassen sich eindrucksvoll die enormen Vorteile eines Strömungsreglers 1 gemäss der vorliegenden Erfindung demonstrieren. Die Fig. 7 zeigt ein schematisches Durchfluss - Drehzahl Diagramm der Regelpumpe 3 zusammen mit dem Vordruckregler 2, wobei erfindungsgemäss die Pumpe 3 mit dem Vordruck PV des Vordruckreglers 2 beaufschlagt wird. Auf der Abszisse ist der Volumenstrom VS in beliebigen Einheiten und auf der Ordinate ist die Drehzahl U der Regelpumpe 3 in beliebigen Einheiten aufgetragen. Die drei Kurven entsprechen jeweils drei verschiedenen Werten P1, P2, P3 des Vordrucks PV des Fluids F im Strömungssystem 100, wobei gilt P3>P2>P1. Die Darstellung der Fig. 7 ist charakteristisch für das Verhalten des erfindungsgemässen Strömungsreglers 1 als solches und, da die Abszisse und Ordinate in beliebigen Einheiten aufgetragen sind und die Druckwerte P1, P2, und P3 nicht näher spezifiziert sind, ist die Darstellung der Fig. 7 grundsätzlich für alle Ausführungsbeispiele eines Strömungsreglers 1 zutreffend.

Wie der Fig. 7 deutlich zu entnehmen ist, wird der Volumenstrom VS bei konstantem Druck P1, P2, oder P3 umso kleiner, je grösser die Umdrehungszahl U der Pumpe ist. Erwartungsgemäss muss beim grössten Druck P3 die Pumpe mit höherer Drehzahl betrieben werden um den Volumenstrom VS auf null zur reduzieren, als bei den niedrigeren Drücken P1 und P2.

Es ist zu beachten, dass in dem Diagramm gemäss Fig. 7 die Drehzahl 0 (Stillstand) der Regelpumpe 3 im Gegensatz zu gewohnten Darstellungen am darstellungsgemäss oberen Rand des Diagramms aufgetragen ist, also die Drehzahl U in Richtung zur Ordinate hin nach unten zunimmt.

Besondere Beachtung sollte dabei den im Diagramm gekennzeichneten Bereichen A und B geschenkt werden.

Der Bereich A charakterisiert das Regelverhalten eines erfindungsgemässen Strömungsreglers 1 bei kleinem bzw. bei verschwindendem Volumenstrom VS. Deutlich zu erkennen ist die exzellente Auflösung und Regeldynamik im Bereich kleiner bzw. verschwindender Volumenströme VS. Wie sehr gut zu erkennen ist, sind in dem mit A gekennzeichneten Bereich verhältnismässig grosse Drehzahländerungen der Regelpumpe 3 notwendig um auch nur kleine Änderungen Im Volumenstrom VS hervorzurufen. Das ist gleichbedeutend mit einer sehr hohen Auflösung der Drehzahlregelung in diesem Volumenstrombereich. Das ist einer der entscheidenden Unterschiede zu den aus dem Stand der Technik bekannten Strömungsreglern 1', deren Regelauflösung nämlich gerade im Bereich kleiner Volumenströme VS' immer schlechter wird, so dass die bekannten Strömungsregler 1' im Bereich verschwindender Volumenströme VS' im schlechter regeln und schliesslich überhaupt nicht mehr regeln können.

Aber auch im Bereich mittlerer Volumenströme VS, die im Diagramm der Fig. 7 durch den Bereich B markiert sind, zeigt der erfindungsgemässe Strömungsregler 1 ein deutlich verbessertes Verhalten gegenüber den bekannten Strömungsreglern 1'. Wie deutlich zu sehen ist, reagiert der Volumenstrom VS nahezu linear in Abhängigkeit von der Änderung der Drehzahl U der Regelpumpe 3, was natürlich in diesem Bereich besonders wünschenswert ist, da somit eine Änderung der Drehzahl U der Regelpumpe 3 zu einer nahezu proportionalen Änderung des Volumenstroms VS führt.

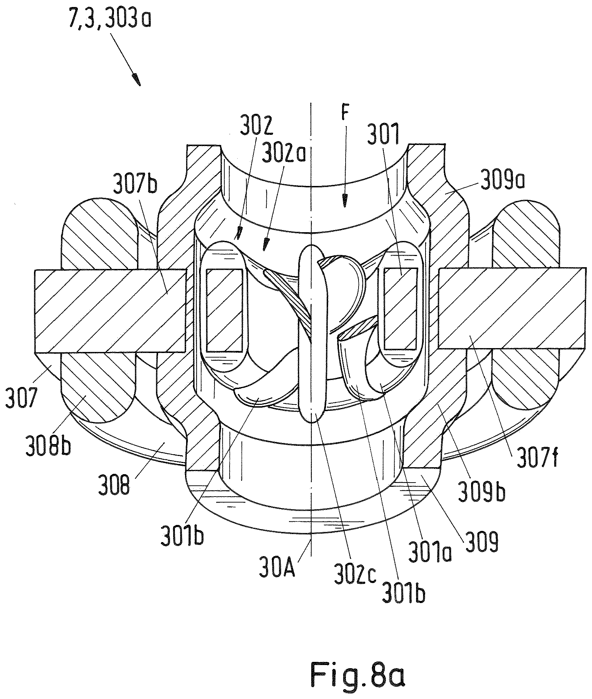

Fig. 8a zeigt schematisch einen Längsschnitt durch eine Axialpumpe, wobei Fig. 8a lediglich beispielhaft und stellvertretend für Axialpumpen aller Art steht, wie sie dem Fachmann in zahlreichen Varianten an sich bekannt sind. Die Regelpumpe 3 der Fig. 8a, die eine als Axialpumpe 303a ausgestaltete Rotationspumpe mit einem Gehäuseteil 309, welches Verengungsstellen 309a,309b aufweist. Ausserhalb des Gehäuses 309 ist ein das Gehäuse 309 in Umfangsrichtung umschliessender Stator 307 angeordnet, welcher in radialer Richtung verlaufende Zähne 307b,307f aufweist. Diese Zähne 307b,307f liegen an deren Spitze innerhalb des Mantels des Gehäuseteils 309, derart, dass zwischen der Spitze der Zähne 307b,307f und dem Innenraum des Gehäuses 309 ein Gehäuseabschnitt liegt, sodass der Innenraum des Gehäuses 309 vollständig getrennt ist vom Stator 307. Der Stator 307 mit Zähnen 307b,307f ist aus einem ferromagnetischen Material gebildet. Die Zähne 307b,307f sind von Spulen 308b umwickelt, wobei die Gesamtheit der Wicklungen 308 dargestellt ist. Innerhalb des Gehäuses 309 ist der Rotor 302, ausgestaltet als ein Axialrad 302a, auch axiales Laufrad genannt, angeordnet. Dieses Axialrad 302a besteht im dargestellten Ausführungsbeispiel aus einem ringförmig ausgestalteten, in radialer Richtung magnetisierten Permanentmagnet 301, welches von einer aus einem Kunststoff bestehenden Rotorummantelung 301a umschlossen ist. Innerhalb der kreisförmigen Ausnehmung des magnetisch wirksamen Rotorteils 301 sind hydrodynamisch verlaufend ausgestaltete Schaufeln 301b sowie ein in bezüglich dem Axialrad 302a in axialer Richtung 30A verlaufendes Mittelteil 301c angeordnet. Die Schaufeln 301b verlaufen in axialer Richtung 30A über die Rotorummantelung 301a vorstehend bis zur dem Stator 307 zugewandten Aussenfläche der Rotorummantelung 301a. Die Schaufeln 301b bilden zusammen mit dem Mittelteil 1c ein zur Erzeugung einer axialen Strömung günstiges Flügelrad, wobei das Flügelrad vorteilhafterweise einen möglichst grossen Durchmesser aufweist, um eine grosse Pumpleistung zu bewirken. Vorteilhafterweise sind die Schaufeln 301b nicht nur innerhalb des Innendurchmessers des Rotorteils 301 verlaufend angeordnet, sondern verlaufen, wie in Fig. 1 dargestellt, in axialer Richtung 30A über die Rotorummantelung 301a vorstehend bis annähernd zur Wand des Gehäuses 309. Dadurch wird beinahe der gesamte Durchmesser des Innenraumes des Gehäuses 309 genutzt zur Anordnung des Flügelrades beziehungsweise zur Förderung des Fluides F. Die Rotorummantelung 301a sowie die Schaufeln 301b und das Mittelteil 301c als auch das Gehäuse 309 sind aus einem nicht ferromagnetischen Material wie einem Kunststoff, Metall wie Titan, Keramik oder einem biokompatiblen Werkstoff wie Polycarbonat gefertigt. Das Axialrad 302a wird durch den magnetisch wirksamen Rotorteil 301 über magnetisch wirkende Kräfte vom Stator 307 berührungslos innerhalb des Gehäuses 309 gehalten, wobei zugleich ein auf den Rotorteil 301 wirksames Drehmoment erzeugbar ist, um das Axialrad 2a um die Rotationsachse 30A drehend anzutreiben. Nicht dargestellt sind Lagesensoren zur Erfassung der Lage des Axialrades 302a beziehungsweise des Rotorteils 301. Diese Lagesensoren sind vorzugsweise entweder ausserhalb des Gehäuses 309 oder innerhalb des Mantels des Gehäuses 309 angeordnet, um die Lage des Rotorteils 301 oder den magnetischen Fluss berührungslos zu messen. Als Messprinzip der Lagesensoren ist zum Beispiel ein Wirbelstromsensor, ein induktiver Sensor oder ein Hallelement mit einem Permanentmagnet geeignet. Die Lage des Axialrades 302a ist in einer etwa senkrecht zur Rotationsachse 30A verlaufenden Ebene berührungslos ansteuerbar durch eine entsprechende Ansteuerung der im Stator 307 angeordneten Wicklungen 308a,308b,308c,308d,308e,308f. Die Wicklungen umfassen eine Antriebswicklung z.B. mit einer Polpaarzahl p und eine Steuerwicklung mit einer Polpaarzahl von z.B. p+1 oder p-1.

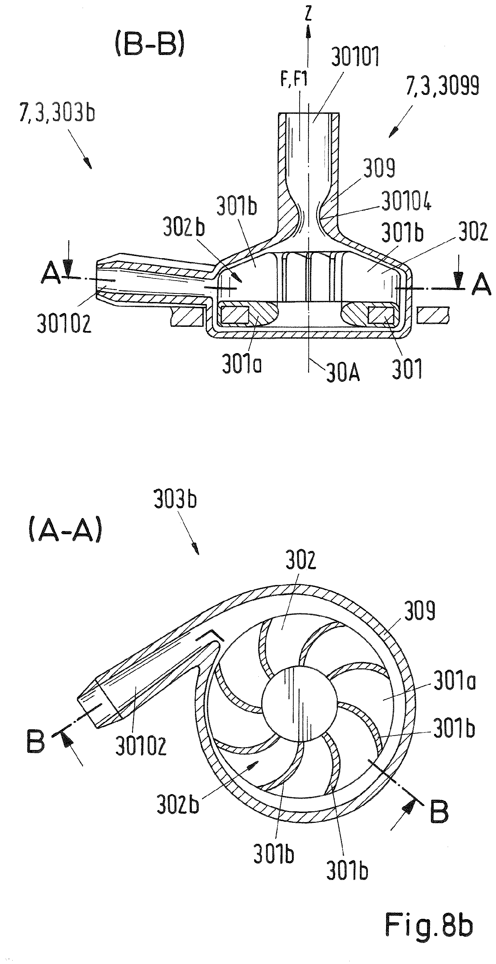

Fig. 8b zeigt schematisch einen Längsschnitt durch eine Zentrifugalpumpe, wobei Fig. 8b lediglich beispielhaft und stellvertretend für Zentrifugalpumpen aller Art steht, wie sie dem Fachmann in zahlreichen Varianten an sich bekannt sind. Das darstellungsgemäss obere Bild der Fig. 8b zeigt dabei einen Längsschnitt durch eine Zentrifugalpumpe entlang der Linie B-B des unteren Bildes der Fig. 8b, während das untere Bild der Fig. 8b einen Querschnitt durch die Zentrifugalpumpe gemäss dem oberen Bild der Fig. 8b zeigt.

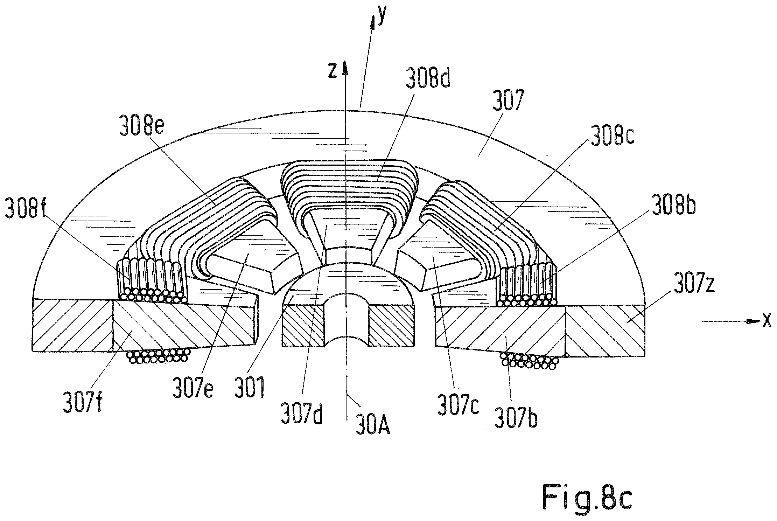

Die Zentrifugalpumpe 303b besteht aus einem Zentrifugalpumpenteil 3099, welcher das Gehäuse 309 mit innenliegendem Zentrifugalrotor 302b umfasst, sowie einer Antriebs- und Lagervorrichtung, welche durch die Zähne 307b,307f des Stators 307 angedeutet ist. Der Stator 307 kann wie im Ausführungsbeispiel gemäss Fig. 8a oder Fig. 8c dargestellt ausgebildet sein. Das Gehäuse 309 kann fest oder lösbar mit der Antriebsvorrichtung verbunden sein. In einer vorteilhaften Ausgestaltung der Zentrifugalpumpe 303b ist das Gehäuse 309, wie im oberen Bild der Fig.8b dargestellt, teilweise zwischen die Zähne 307b,307f des Stators 307 einführbar und liegt lose auf der Antriebsvorrichtung auf. Das Gehäuse 309 lässt sich dadurch auf einfache Weise wieder aus dem Stator 307 entfernen und zum Beispiel auswechseln. Wird der Zentrifugalpumpenteil 3099 zum Beispiel als eine Blutpumpe verwendet, so kann der Zentrifugalpumpenteil 3099 als ein Einmalprodukt ausgeführt sein. Während somit der Zentrifugalpumpenteil 3099 nach jeder Anwendung ersetzt wird, kann die Antriebsvorrichtung beliebig oft verwendet werden zum Antrieb des im Zentrifugalpumpenteil 3099 angeordneten Zentrifugalrades 302b. Das Zentrifugalrad 302b ist durch den Stator 307 und die magnetisch wirkenden Kräfte berührungslos schwebend gehalten, sobald der Zentrifugalpumpenteil 3099 in der vorgesehenen Lage im Stator 307 angeordnet ist. Durch die passiv und stabilisierend bzw. rückstellend auf die Lage des Rotors 302 wirkenden Kräfte ist dieser bezüglich aller sechs Freiheitsgrade berührungslos im Stator 307 beziehungsweise im Gehäuse 309 lagerbar. Dabei ist zu beachten, dass die rein passiv bewirkten, die Lage des Rotorteils 301 stabilisierend beeinflussenden magnetischen Kräfte, insbesondere die Kraft in axialer Richtung z, von relativ kleinem Betrag ist. Bei grösseren, in z-Richtung Zentrifugalrad 302b angreifenden Kräften, würde dieses bezüglich dem Stator 307 abgehoben beziehungsweise der Rotor 302 würde am Gehäuse 309 des Zentrifugalpumpenteils 3099 streifen. Die Zentrifugalpumpenteilen 3099 sind derart ausgestaltet, dass die in z-Richtung am Rotor 302 angreifenden Kräfte vermindert sind, um den Rotor 302 auch während der Förderung eines Fluides F berührungslos im Gehäuse 309 zu lagern.

Das Rotorteil 301 kann als ringförmiger Körper ausgestaltet sein, oder als scheibenförmiger Körper ausgebildet sein. Wobei bei einem lagerlosen Motor das Kriterium "scheibenförmiger Körper" in den meisten Fällen bedeutet, dass die Dicke, d.h. die Höhe des Rotors kleiner als der halbe Durchmesser des Rotors ist, weil sich dann der Rotor magnetisch gegen Verkippung stabilisieren lässt.

Das untere Bild der Fig. 8b zeigt einen Längsschnitt entlang der Linie B-B eines Zentrifugalpumpenteils 3099 gemäss dem oberen Bild der Fig. 8b mit einer in z-Richtung verlaufenden Pumpeneinlassöffnung 30101. Der Zentrifugalpumpenteil 3099 weist ein Gehäuse 309 mit einem innerhalb des Gehäuses 309 angeordneten Rotor 302 auf. Das Gehäuse 309 ist bevorzugt flüssigkeits- und gasdicht geschlossen und weist eine Pumpeneinlassöffnung 30101 sowie eine bezüglich dem Rotor 302 in radialer Richtung verlaufende Pumpenauslassöffnung 30102 auf. Der Rotor 302 umfasst ein ringförmig ausgestaltetes, permanentmagnetisiertes Rotorteil 301, eine den Rotorteil 301 umgebende Rotorummantelung 301a sowie eine Mehrzahl von über den Umfang des Rotors 302 gleichmässig verteilt angeordnete Schaufeln 301b, welche ein Flügelrad ausbilden.
Das in Richtung F1 einströmende Fluid F weist im Bereich der Pumpeneinlassöffnung 30101 einen Druck p1 auf. Der Pumpeneinlassöffnung 30101 anschliessend ist eine Verengung 30104 angeordnet, welche als eine Düse wirkt, sodass das Fluid F nach dem Passieren der Düse eine erhöhte Strömungsgeschwindigkeit aufweist. Das Fluid F wird in Richtung F2 durch die Pumpenauslassöffnung 30102 strömend und unter einem Druck p3 stehend in ein nachfolgendes, nicht dargestelltes Leitungsmittel gefördert.

Fig. 8c zeigt eine perspektivische Ansicht eines Schnittes durch einen Stator 307 sowie ein magnetisch wirksames Rotorteil 301 der Rotationspumpe, ausgestaltet als Axialpumpe 303a gemäss Fig. 8a oder als Zentrifugalpumpe 303b gemäss Fig. 8b. Beim hier diskutierten elektrischen Rotationsantrieb handelt es sich um ein spezielles Ausführungsbeispiel der vollständig magnetisch gelagerten elektrischen Rotationsmaschine gemäss WO 9631934 A1, das nur exemplarisch und stellvertretend für weitere lagerlose Motoren der Klasse gemäss WO 9631934 A1 beschrieben wird, die in der Zwischenzeit in vielen technischen Anwendungen etabliert und in zahlreichen Varianten dem Fachmann wohl bekannt sind und ebenfalls vorteilhaft in einem erfindungsgemässen Strömungsregler verwendet werden können. Die magnetisch nicht wirksamen Teile der Rotationspumpe, wie das Gehäuse 309 oder die Rotorummantelung 301a und die Schaufeln 301b sind zum besseren Verständnis der Anordnung nicht dargestellt. Der Stator 307 weist ein ringförmiges, als Rückschlusseisen 307z ausgestaltetes Teil auf, an welchem die Zähne 307b,307c,307d,307e,307f in radialer Richtung verlaufend angeordnet sind. Das Rückschlusseisen 7z sowie die Zähne 7b,7c,7d,7e,7f bestehen aus einem ferromagnetischen Metall. Der magnetisch wirksame Rotorteil 301 besteht aus einem ringförmigen, in radialer Richtung polarisierten Permanentmagnet. Die Spulen 308b,308c,308d,308e,308f weisen zwei voneinander unabhängig ansteuerbar ausgestaltete Teilwicklungen auf, wobei die eine Teilwicklung als eine Antriebswicklung z.B. mit einer Polpaarzahl p und die andere Teilwicklung als eine Steuerwicklung z.B. mit einer Polpaarzahl von p+1 oder p-1 ausgestaltet ist. Die Antriebswicklung und der magnetisch wirksame Teil des Rotors 301 wirken vergleichbar einer Synchronmaschine zusammen, indem mit der zweiphasig ausgestalteten Antriebswicklung im Stator 307 ein magnetisches Drehfeld erzeugt wird, welchem der Rotor 301 folgt, so dass der Rotor 301 um dessen Achse 30A drehend angetrieben wird. Die Lage des Rotors 301 wird mit nicht dargestellten Lagesensoren erfasst und die dreiphasig ausgestalteten Steuerwicklungen, unter Berücksichtigung des durch die Antriebswicklung erzeugten magnetischen Feldes, derart angesteuert, dass der Rotor 301 in einer zur Achse 30A senkrechten Ebene, daher in der x- und y-Richtung, berührungslos im Stator 307 gehalten wird. Der Rotor 301 ist somit bezüglich dreier Freiheitsgrade, nämlich der Lage in x- und y-Richtung sowie der Rotation um die Achse 30A, aktiv ansteuerbar.

Es versteht sich, dass die im Rahmen dieser Anmeldung diskutierten Ausführungsbeispiele lediglich exemplarisch zu verstehen sind und insbesondere auch alle geeigneten Kombinationen und dem Fachmann wohlbekannte einfache Weiterentwicklungen von der Erfindung erfasst sind.

## Patentansprüche

1. Strömungsregler zum Einstellen eines vorgebbaren Volumenstroms (VS) eines Fluids (F), umfassend einen ersten Sensor (SF1, SP1) zur Bestimmung eines ersten Istwerts (IW1) einer ersten Strömungskenngrösse (KF1, KP1) des Fluids (F), einen Vordruckregler (2) zum Einstellen eines vorgebbaren Vordrucks (PV) an einem Vordruckausgang (22) des Vordruckreglers (2) sowie eine Regelpumpe (3) in Form einer Kreiselpumpe, wobei das Fluid (F) unter einem Anlagendruck (PA) im Betriebszustand über eine Zuströmleitung (20) und einen Vordruckeingang (21) dem Vordruckregler (2) zuführbar und unter dem Vordruck (PV) über eine zwischen dem Vordruckausgang (22) und der Regelpumpe (3) vorgesehene Strömungsverbindung (4) zu der Regelpumpe (3) weiterleitbar ist, **dadurch gekennzeichnet, dass** der Vordruckausgang (22) über die Strömungsverbindung (4) mit einem Hochdruckanschluss (31) der Regelpumpe (3) strömungsverbunden ist, so dass das Fluid (F) vom Vordruckregler (2) der Regelpumpe (3) zuführbar und über einen Niederdruckanschluss (32) aus der Regelpumpe (3) in eine Abströmleitung (5) wieder abführbar ist, wobei in Abhängigkeit vom ersten Istwert (IW1) der ersten Strömungskenngrösse (KF1, KP1) eine Drehzahl der Regelpumpe (3) mittels einer Regelansteuerung (6) unter Verwendung eines ersten Sollwerts (SW1) derart einstellbar ist, dass durch die Regelpumpe (3) ein dem Vordruck (PV) entgegen wirkender Begrenzungsdruck (PB) erzeugbar ist, so dass der vorgebbare Volumenstrom (VS) des Fluids (F) in der Abströmleitung (5) einstellbar ist.

2. Strömungsregler nach Anspruch 1, wobei der erste Sensor (SF1, SP1) ein erster Durchflussensor (SF1) ist und die erste Strömungskenngrösse (KF1, KP1) einen Fluidfluss (KF1) des Fluids (F) charakterisiert.

3. Strömungsregler nach Anspruch 1, wobei der erste Sensor (SF1, SP1) ein erster Drucksensor (SP1) ist und die erste Strömungskenngrösse (KF1, KP1) einen ersten Fluiddruck (KP1) im Fluid (F) charakterisiert.

4. Strömungsregler nach einem der vorangehenden Ansprüche, wobei der erste Sensor (SF1, SP1) nachgeordnet zum Niederdruckanschluss (32) der Regelpumpe (3) an der Abströmleitung (5) vorgesehen ist.

5. Strömungsregler nach einem der Ansprüche 1 bis 3, wobei der erste Sensor (SF1, SP1) an der Strömungsverbindung (4) zwischen dem Vordruckregler (2) und der Regelpumpe (3) vorgesehen ist.

6. Strömungsregler nach einem der vorangehenden Ansprüche, wobei an der Abströmleitung (5) eine Zusatzpumpe (7), insbesondere eine einer Druckverstärkung (PZ) dienende Kreiselpumpe als Boosterpumpe vorgesehen ist.

7. Strömungsregler nach Anspruch 6, wobei an der Abströmleitung (5) nachgeordnet zur Zusatzpumpe (7) ein zweiter Sensor (SF2, SP2) zur Bestimmung eines zweiten Istwerts (IW2) einer zweiten Strömungskenngrösse (KF2, KP2) des Fluids (F) vorgesehen ist, so dass in Abhängigkeit vom zweiten Istwert (IW2) der zweiten Strömungskenngrösse (KF2, KP2) eine Drehzahl der Zusatzpumpe (7) mittels einer Zusatzansteuerung (8) unter Verwendung eines zweiten Sollwerts (SW2) derart steuerbar und / oder regelbar ist, dass der vorgebbare Volumenstrom (VS) des Fluids (F) in der Abströmleitung (5) einstellbar ist.

8. Strömungsregler nach Anspruch 7, wobei der zweite Sensor (SF2, SP2) ein zweiter Durchflusssensor (SF2) ist und zum Einstellen des Volumenstroms (VS) die Regelansteuerung (6) und die Zusatzansteuerung (8) zum Einlesen des zweiten Istwert (IW2) mit dem zweiten Durchflusssensor (SF2) parallel signalverbunden sind und die Regelansteuerung (6) und die Zusatzansteuerung (8) parallel mit einem gemeinsamen Sollwert (SW) gespeist werden.

9. Strömungsregler nach Anspruch 7, wobei der zweite Sensor (SF2, SP2) ein zweiter Drucksensor (SP2) ist und zum Einstellen des Volumenstroms (VS) die Regelansteuerung (6) und die Zusatzansteuerung (8) zum Einlesen des zweiten Istwert (IW2) mit dem zweiten Drucksensor (SP2) parallel signalverbunden sind und die Regelansteuerung (6) und die Zusatzansteuerung (8) parallel mit dem gemeinsamen Sollwert (SW) gespeist werden.

10. Strömungsregler nach einem der Ansprüche 7 bis 9, wobei zur Einstellung des Vordrucks (PV) der Vordruckregler (2) ein aktiver Vordruckregler (2) ist, insbesondere ein durch den ersten Sensor (SF1, SP1) und / oder ein durch den zweiten Sensor (SF2, SP2) beeinflusster aktiver Vordruckregler (2) ist und / oder wobei ein Vordrucksensor an der Zuströmleitung (20) und / oder an der Strömungsverbindung (4) und / oder an der Abströmleitung (5) derart vorgesehen und mit dem aktiven Vordruckregler (2) signalverbunden ist, dass der Vordruck (PV) aktiv einstellbar ist.

11. Strömungsregler nach einem der vorangehenden Ansprüche, wobei der Vordruckregler (2) eine Druck reduzierende Einheit, insbesondere ein manueller Druckregler, ein pneumatischer Druckregler, ein elektrischer Druckregler, ein Proportionalventil oder eine andere geeignete Druck reduzierende Einheit ist.

12. Strömungsregler nach einem der Ansprüche 6 bis 11, wobei die Regelpumpe (3) und / oder die Zusatzpumpe (7) eine Zentrifugalpumpe, oder eine Axialflusspumpe, oder eine Seitenkanalpumpe, oder eine Diagonalflusspumpe oder eine andere Kreiselpumpe ist und / oder wobei der Antrieb der Regelpumpe (3) und / oder der Zusatzpumpe (7) ein lagerloser Motor ist.

13. Strömungsregler nach einem der Ansprüche 6 bis 11, wobei ein Rotor der Regelpumpe (3) und / oder der Zusatzpumpe (3) einen Permanentmagneten umfasst und / oder wobei ein Rotor der Regelpumpe (3) und / oder der Zusatzpumpe (3) ein flacher Scheibenrotor ist, insbesondere ein Scheibenrotor ist dessen Höhe kleiner oder gleich dem halben Durchmesser des Scheibenrotors ist.

14. Strömungsregler nach einem der vorangehenden Ansprüche, wobei eine Komponente des Strömungsreglers ein Einmalprodukt ist, insbesondere ein Pumpengehäuse und / oder der Rotor der Regelpumpe (3) oder der Zusatzpumpe (7) ein Einmalprodukt ist.

15. Verfahren zum Einstellen eines vorgebbaren Volumenstroms (VS) eines Fluids (F) mittels eines Strömungsreglers (1), **dadurch gekennzeichnet, dass** ein Strömungsregler (1) nach einem der vorangehenden Ansprüche verwendet wird, wobei insbesondere ein Volumenstrom einer physikalisch oder chemisch aggressiven Flüssigkeiten, einer medizinischen, biologischen oder pharmazeutische Flüssigkeit,z.B. Blut oder eines Slurry durch den Strömungsregler (1) geregelt wird.

## Claims

1. A flow regulator for setting a predefinable volume flow (VS) of a fluid (F) comprising a first sensor (SF1, SP1) for determining a first actual value (IW1) of a first flow parameter (KF1, KP1) of the fluid (F), a pre-pressure regulator (2) for setting a predefinable pre-pressure (PV) at a pre-pressure outlet (22) of the pre-pressure regulator (2) as well as a regulating pump (3) in the form of a rotary pump, wherein the fluid (F) can be supplied to the pre-pressure regulator (2) at a plant pressure (PA) in the operating state via an inflow line (20) and a pre-pressure inlet (21) and can be conducted further to the regulating pump (3) at the pre-pressure (PV) via a flow connection (4) provided between the pre-pressure outlet (22) and the regulating pump (3), **characterized in that** the pre-pressure outlet (22) is connected to a high pressure connection (31) of the regulating pump (3) in a flow communicating manner via the flow connection (4) in such a way that the fluid (F) can be supplied from the pre-pressure regulator (2) of the regulating pump (3) and can be guided away again from the regulating pump (3) via a low pressure connection (32) into an outflow line (5), wherein a speed of rotations of the regulating pump (3) can be set by means of a regulating control (6) on use of a first desired value (SW1) in dependence on the first actual value (IW1) of the first flow parameter (KF1, KP1) in such a way that a limiting pressure (PB) acting against the pre-pressure (PV) can be produced by means of the regulating pump (3) so that the predefinable volume flow (VS) of the fluid (F) can be set in the outflow line (5).

2. A flow regulator in accordance with claim 1, wherein the first sensor (SF1, SP1) is a first through-flow sensor (SF1) and the first flow parameter (KF1, KP1) characterizes a fluid flow (KF1) of the Fluid (F).

3. A flow regulator in accordance with claim 1, wherein the first sensor (SF1, SP1) is a first pressure sensor (SP1) and the first flow parameter (KF1, KP1) characterizes a fluid pressure (KP1) in the fluid (F).

4. A flow regulator in accordance with any one of the preceding claims, wherein the first sensor (SF1, SP1) is provided at the outflow line (5) downstream of the low pressure connection (32) of the regulating pump (3).

5. A flow regulator in accordance with any one of claims 1 to 3, wherein the first sensor (SF1, SP1) is provided at the flow connection (4) between the pre-pressure regulator (2) and the regulating pump (3).

6. A flow regulator in accordance with any one of the preceding claims, wherein an additional pump (7), in particular a rotary pump serving a pressure increase (PZ), is provided at the outflow line (5) as a booster pump.

7. A flow regulator in accordance with claim 6, wherein a second sensor (SF2, SP2) for determining a second actual value (IW2) of a second flow parameter (KF2, KP2) of the fluid (F) is provided at the outflow line (5) downstream of the additional pump (7) in such a way that a speed of rotations of the additional pump (7) can be controlled and/or regulated by means of an additional control (8) on use of a second desired value (SW2) in dependence on the second current actual value (IW2) of the second flow parameter (KF2, KP2), in such a way that the predefinable volume flow (VS) of the fluid (F) can be set in the outflow line (5).

8. A flow regulator in accordance with claim 7, wherein the second sensor (SF2, SP2) is a second through-flow sensor (SF2) and, for setting the volume flow (VS), the regulating control (6) and the additional control (8) are connected in parallel in a signal conducting manner to the second through flow sensor (SF2) for reading in the second actual value (IW2) and the regulating control (6) and the additional control (8) are fed in parallel with a common desired value (SW).

9. A flow regulator in accordance with claim 7, wherein the second sensor (SF2, SP2) is a second pressure sensor (SP2) and, for setting the volume flow (VS), the regulating control (6) and the additional control (8) are connected to the second pressure sensor (SP2) in parallel in a signal conducting manner for the reading in of the second actual value (IW2) and the regulating control and the additional control (8) are fed in parallel with the common desired value (SW).

10. A flow regulator in accordance with any one of the claims 7 to 9, wherein, for setting the pre-pressure (PV), the pre-pressure regulator (2) is an active pre-pressure regulator (2), in particular an active pre-pressure regulator (2) influenced by the first sensor (SF1, SP1) and/or by the second sensor (SF2, SP2); and/or wherein a pre-pressure sensor is provided at the inflow line (20) and/or at the outflow connection (4) and/or at the outflow line (5) and is connected to the active pre-pressure regulator (2) in a signal conducting manner in such a way that the pre-pressure (PV) can be actively set.

11. A flow regulator in accordance with any one of the preceding claims, wherein the pre-pressure regulator (2) is a pressure reducing unit, in particular a manual pressure regulator, a pneumatic pressure regulator, an electric pressure regulator, a proportional valve or a different suitable pressure reducing unit.

12. A flow regulator in accordance with any one of the claims 6 to 11, wherein the regulating pump (3) and/or the additional pump (7) is a centrifugal pump or an axial flow pump or a side passage pump or a diagonal flow pump or a different rotary pump; and/or wherein the drive of the regulating pump (3) and/or of the additional pump (7) is a bearing-free motor.

13. A flow regulator in accordance with any one of the claims 6 - 11, wherein a rotor of the regulating pump (3) and/or of the additional pump (3) comprises a permanent magnet; and/or wherein a rotor of the regulating pump (3) and/or of the additional pump (3) is a flat disc rotor, in particular a disc rotor whose height is smaller than or equal to half the diameter of the disc rotor.

14. A flow regulator in accordance with any one of the preceding claims, wherein a component of the flow regulator is a single use product, in particular a pump housing and/or the rotor of the regulating pump (3) or of the additional pump (7) is/are a single use product.

15. A method of setting a predefinable volume flow (VS) of a fluid (F) by means of a flow regulator (1), **characterized in that** a flow regulator (1) in accordance with any one of the preceding claims is used, wherein in particular a volume flow of a physically aggressive liquid or a chemically aggressive liquid, a medical liquid, a biological liquid or a pharmaceutical liquid, e.g. blood or a slurry is regulated by the flow regulator 1.

## Revendications

1. Régulateur de débit pour régler un débit volumique prédéfinissable (VS) d'un fluide (F) comprenant un premier capteur (SF1, SP1) pour déterminer une première valeur réelle (IW1) d'une première caractéristique de débit (KF1, KP1) du fluide (F), un régulateur de pré-pression (2) pour régler une pré-pression prédéfinissable (PV) à une sortie de pré-pression (22) du régulateur de pré-pression (2) et une pompe de régulation (3) sous la forme d'une pompe centrifuge, dans lequel le fluide (F) peut être alimenté au régulateur de pré-pression (2) sous une pression d'installation (PA) dans l'état de fonctionnement via un conduit d'entrée (20) et une entrée de pré-pression (21) et le fluide (F) peut être envoyé à la pompe de régulation (3) sous la pré-pression (PV) via une connexion de débit (4) prévu entre la sortie de pré-pression (22) et la pompe de régulation (3), **caractérisé en ce que** la sortie de pré-pression (22) est en communication de fluide avec un raccord à haute pression (31) de la pompe de régulation (3) via la connexion de débit (4), de sorte que le fluide (F) peut être alimenté à la pompe de régulation (3) du régulateur de pré-pression (2) et que le fluide (F) peut être déchargé encore de la pompe de régulation (3) dans un conduit de refoulement (5) via un raccord à basse pression (32), dans lequel une vitesse de rotation de la pompe de régulation (3) peut être réglée en utilisant une première valeur de consigne (SW1) au moyen d'une régulation (6) en fonction de la première valeur réelle (IW1) de la première caractéristique de débit (KF1, KP1), qu'une pression limite (PB) contrant la pré-pression (PV) peut être générée par la pompe de régulation (3), de sorte que le débit volumique prédéfinissable (VS) du fluide (F) est réglable dans le conduit de refoulement (5).

2. Régulateur de débit selon la revendication 1, dans lequel le premier capteur (SF1, SP1) est un premier capteur de débit et la première caractéristique de débit (KF1, KP1) caractérise un flux de fluide (KF1) du fluide (F).

3. Régulateur de débit selon la revendication 1, dans lequel le premier capteur (SF1, SP1) est un premier capteur de pression (SP1) et a première caractéristique de débit (KF1, KP1) caractérise une première pression de fluide (KP1) dans le fluide (F).

4. Régulateur de débit selon l'une des revendications précédentes, dans lequel le premier capteur (SF1, SP1) est prévu en aval du raccord à basse pression (32) de la pompe de régulation (3) au conduit de refoulement (5).

5. Régulateur de débit selon l'une des revendications 1 à 3, dans lequel le premier capteur (SF1, SP1) est prévu à la connexion de débit (4) entre le régulateur de pré-pression (2) et la pompe de régulation (3).

6. Régulateur de débit selon l'une des revendications précédentes, dans lequel une pompe additionnelle (7) est prévue au conduit de refoulement (5) en tant que pompe de booster, en particulier une pompe centrifuge servant de l'amplification de pression.

7. Régulateur de débit selon la revendication 6, dans lequel un deuxième capteur (SF2, SP2) pour déterminer une deuxième valeur réelle (IW2) d'une deuxième caractéristique de débit (KF2, KP2) du fluide (F) est prévu en aval à la pompe additionnelle (7) au conduit de refoulement (5), de sorte qu'une vitesse de rotation de la pompe additionnelle (7) peut être commandée ou régulée en utilisant une deuxième valeur de consigne (SW2) au moyen d'une régulation additionnelle (8) en fonction de la deuxième valeur réelle (IW2) de la deuxième caractéristique de débit (KF2, KP2), que le débit volumique prédéfinissable (VS) du fluide (F) est réglable dans le conduit de refoulement (5).

8. Régulateur de débit selon la revendication 7, dans lequel le deuxième capteur (SF2, SP2) est un deuxième capteur de débit (SF2) et la régulation (6) pour régler le débit volumique (VS) et la régulation additionnelle (8) pour mémoriser la deuxième valeur réelle (IW2) sont connectés par signal en parallèle au deuxième capteur de débit (SF2) et la régulation (6) et la régulation additionnelle (8) sont alimentés en parallèle avec une valeur de consigne commune (SW).

9. Régulateur de débit selon la revendication 7, dans lequel le deuxième capteur (SF2, SP2) est un deuxième capteur de pression (SP2) et la régulation (6) pour régler le débit volumique (VS) et la régulation additionnelle (8) pour mémoriser la deuxième valeur réelle (IW2) sont connectés par signal en parallèle au deuxième capteur de pression (SP2) et la régulation (6) et la régulation additionnelle (8) sont alimentés en parallèle avec la valeur de consigne commune (SW).

10. Régulateur de débit selon l'une des revendications 7 à 9, dans lequel le régulateur de pré-pression (2) pour régler la pré-pression (PV) est un régulateur de pré-pression (2) actif, en particulier un régulateur de pré-pression (2) actif influencé par le premier capteur (SF1, SP1) et / ou influencé par le deuxième capteur (SF2, SP2) et / ou dans lequel un capteur de pré-pression est tellement prévu au conduit d'entrée (20) et / ou à la connexion de débit (4) et / ou au conduit de refoulement (5) et connecté par signal au régulateur de pré-pression (2) actif, que la pré-pression (PV) est activement réglable.

11. Régulateur de débit selon l'une des revendications précédentes, dans lequel le régulateur de pré-pression (2) est un réducteur de pression, en particulier un régulateur de pression manuel, un régulateur de pression pneumatique, un régulateur de pression électrique, une vanne proportionnelle ou un autre réducteur de pression approprié.

12. Régulateur de débit selon l'une des revendications 6 à 11, dans lequel la pompe de régulation (3) et / ou la pompe additionnelle (7) est une pompe centrifuge ou une pompe à flux axial ou une pompe à canal latéral ou une pompe à flux diagonal ou une autre pompe centrifuge et / ou dans lequel l'entraînement de la pompe de régulation (3) et / ou de la pompe additionnelle (7) est un moteur sans palier.

13. Régulateur de débit selon l'une des revendications 6 à 11, dans lequel un rotor de la pompe de régulation (3) et / ou de la pompe additionnelle (7) comprend un aimant permanent et / ou dans lequel un rotor de la pompe de régulation (3) et / ou de la pompe additionnelle (7) est un rotor à disque plat, en particulier un rotor à disque dont la hauteur est inférieure ou égale à la moitié du diamètre du rotor à disque.

14. Régulateur de débit selon l'une des revendications précédentes, dans lequel un composant du régulateur de débit est un produit pour usage unique, en particulier un boîtier de pompe et / ou le rotor de la pompe de régulation (3) ou de la pompe additionnelle (7) est un produit pour usage unique.

15. Procédé pour régler un débit volumique prédéfinissable (VS) d'un fluide (F) au moyen d'un régulateur de débit (1), **caractérisé en ce qu'**un régulateur de débit (1) selon l'une des revendications précédentes est utilisé, dans lequel en particulier un débit volumique d'un fluide physiquement agressif ou chimiquement agressif, d'un fluide médicinal, biologique ou pharmaceutique, par exemple du sang ou un slurry est régulé par le régulateur de débit (1).
